# EUROPEAN PATENT SPECIFICATION

(11) **EP 3 800 685 B1**
(45) Date of publication and mention of the grant of the patent: **22.01.2025**
(21) Application number: 19830894.2
(22) Date of filing: 04.07.2019
(51) Int. Cl.: H01M 10/04, H01M 50/109, H01M 50/153, H01M 50/171, H01M 50/184, H01M 50/186, H01M 50/167, H01M 50/193, H01M 50/198, H01M 10/0585, H01M 10/052

(54) **COIN-TYPE BATTERY AND MANUFACTURING METHOD FOR SAME**
KNOPFBATTERIE UND HERSTELLUNGSVERFAHREN DAFÜR
BATTERIE DE TYPE PIÈCE DE MONNAIE ET PROCÉDÉ DE FABRICATION ASSOCIÉ

(30) Priority: 04.07.2018 JP 2018127479
(43) Date of publication of application: 07.04.2021
(73) Proprietor: Maxell, Ltd., Kyoto 618-8525 (JP)
(72) Inventor: TAGAWA Hirofumi, Otokuni-gun Kyoto 618-8525 (JP); KOYAMA Kunihiko, Otokuni-gun Kyoto 618-8525 (JP); TSUDA Kenji, Otokuni-gun Kyoto 618-8525 (JP)
(74) Representative: Zimmermann, Tankred Klaus
(86) International application number: PCT/JP2019/026726
(87) International publication number: WO 2020/009206

(56) References cited:
- EP-A1- 3 503 243
- JP-A- 2007 172 859
- JP-A- 2012 079 689
- JP-A- 2014 053 112
- JP-A- 2016 038 992
- JP-A- 2016 054 029
- US-A- 4 487 819
- US-A- 6 066 184
- US-A1- 2012 028 110
- US-B2- 6 759 162

## Description

### TECHNICAL FIELD

The present invention relates to a coin-type battery and a manufacturing method thereof.

### BACKGROUND ART

Flat shape batteries which are called coin-type batteries or button batteries have been known. In a battery of this type, an electrode body configured such that a separator is sandwiched between a positive electrode and a negative electrode is housed in a battery case with an electrolyte. The battery case includes an exterior can which has a bottom portion and a peripheral wall portion and in which an opening portion is provided in the peripheral wall portion, a sealing can which has a flat portion and a side wall portion and in which an opening portion and a shoulder portion are formed in the side wall portion, and a gasket that is arranged between the exterior can and the sealing can. The peripheral wall portion of the exterior can and the side wall portion of the sealing can are fitted together.

For batteries which have the above described structure, in order to increase an internal volume and thus increase capacity while efficiently applying a pressure to the gasket to seal in fitting of the exterior can and the sealing can, various examinations have been conducted for sealing structures of the exterior can and the sealing can.

As one of the sealing structures, it has been proposed to make a cross-sectional shape of the gasket into an L shape without providing a fold portion in the side wall portion of the sealing can (Patent Document 1). Using the above described sealing structure, an internal volume of the side wall portion can be increased, as compared to a structure in which the side wall portion of the sealing can is folded. Thus, the capacity of the battery can be increased.

It has been also proposed to increase adhesion of an edge portion of the side wall portion of the sealing can and the gasket by making curvature radius of an inner circumference side portion of an edge of the side wall portion of the sealing can smaller than curvature radius of an outer circumference side portion and bending the opening portion of the side wall portion of the sealing can toward a center of the battery, in order to increase leakage resistance in a case in which a fold portion is not provided in the side wall portion of the sealing can (Patent Documents 2 and 3). Accordingly, it is possible to improve sealing properties, and thus, suppress the occurrence of leakage.

However, even in the case of making the cross-sectional shape of the gasket into the L shape as described above, reduction of the thickness of the gasket has a limitation. Thus, the internal volume of a battery cannot be increased by a certain amount or more. For this reason, even in a case where the cross-sectional shape of the gasket is devised, the capacity of the battery can be increased only within a limited range.

On the other hand, the use of a material except for the gasket described above as a sealing member has been studied. Patent Document 4, for example, discloses a button battery using a sealing member of a thermoplastic resin (e.g., polyamide or polyether ether ketone) having a thickness of about 0.1 mm. Patent Document 5, for example, discloses a coin-type battery having gasket, at least a portion of which is disposed between a peripheral wall portion of an exterior can and a side wall portion of a sealing can. Patent Document 6, for example, discloses a button type alkaline battery having a gasket which is formed in a shape so that, in the state the negative electrode case is incorporated into the gasket, the lower face of the terminal part of the negative electrode case and the upper face of the gasket bottom part are in contact each other, the outer face of the periphery part of the negative electrode case and the inner face of the gasket are in contact each other, and the first bending part of the negative electrode case and the projection part of the gasket are in contact each other.

### CITATION LIST

### PATENT DOCUMENT

Patent Document 1: Japanese Laid-open Patent Publication No. 08-190900
Patent Document 2: Japanese Laid-open Patent Publication No. 08-222192
Patent Document 3: Japanese Laid-open Patent Publication No. 2007-200682
Patent Document 4: Japanese Laid-open Patent Publication No. 2012-517658
Patent Document 5: European Laid-open Patent Publication No. 3 503 243
Patent Document 6: Japanese Laid-open Patent Publication No. 2007-172859

### SUMMARY OF INVENTION

### PROBLEMS TO BE SOLVED BY INVENTION

In the case of sealing using a thin resin sealing member as disclosed in Patent Document 4, however, it is difficult to obtain sealing properties more excellent than those in the case of performing sealing with a gasket. Thus, there has been required a reliable battery whose capacity is increased without impairing sealing properties by enlarging a housing space in which an electrode body is housed.

It is an object of the present invention to increase a capacity without impairing the sealing properties by enlarging a housing space in which an electrode body is housed and to provide a coin-type battery with excellent reliability and a manufacturing method thereof.

### SOLUTION TO PROBLEM

The invention is defined in the appended claims.

A coin-type battery according to an embodiment of the present invention is a coin-type battery that includes an exterior can including a bottom portion and a peripheral wall portion and having an opening on an opposite side to the bottom portion in a thickness direction, a sealing can which includes a flat portion and a side wall portion and has an opening on an opposite side to the flat portion in the thickness direction and of which a stepped shoulder portion that is located between the flat portion and the opening and expands in a radial direction is provided in the side wall portion, a resin film at least a portion of which is arranged between the peripheral wall portion of the exterior can and the side wall portion of the sealing can, and a power generation element arranged in a housing space formed by the exterior can and the sealing can. The resin film includes a film peripheral wall portion formed to have a cylindrical shape and arranged between the peripheral wall portion of the exterior can and the side wall portion of the sealing can, and a film bottom portion arranged between the bottom portion of the exterior can and an open end portion of the side wall portion of the sealing can, and is an annular body, and when it is assumed that an external diameter of the bottom portion of the exterior can is d1 (mm), an inner diameter of the open end portion in the peripheral wall portion of the exterior can is d2 (mm), an external diameter of the flat portion of the sealing can is d3 (mm), and an external diameter of the open end portion in the side wall portion of the sealing can is d4 (mm), 0.87 ≤ d3/d1 ≤ 0.935 and 0.94 ≤ d2/d4 ≤ 1.02 are satisfied, and a sealant is preferably disposed at at least one of a position between the peripheral wall portion of the exterior can and the resin film or a position between the side wall portion of the sealing can and the resin film (first configuration).

With this configuration, the housing space of the electrode body in the coin-type battery can be made larger than that of a conventional structure, and thus, the capacity of the battery can be increased. That is, the sealing member disposed between the peripheral wall portion of the exterior can and the side wall portion of the sealing can can be constituted by the thin resin film so that the distance between the peripheral wall portion of the exterior can and the side wall portion of the sealing can can be made smaller than that of the conventional structure using a gasket as the sealing member. Accordingly, the housing space of the electrode body in the sealing can can be made larger than that of the conventional structure.

In addition, since an empty space where the sealing member is not disposed is formed inside the side wall portion of the sealing can, the housing space of the electrode body in the sealing can can be made larger.

Furthermore, the external diameter d3 of the flat portion of the sealing can and the external diameter d1 of the bottom portion of the exterior can satisfy the relationship of 0.87 ≤ d3/d1 ≤ 0.935 so that a space inside the sealing can can be made larger with respect to external dimensions of the battery.

The relationship between the inner diameter d2 of the open end portion in the peripheral wall portion of the exterior can and the external diameter d4 of the open end portion in the side wall portion of the sealing can varies depending on a fitting structure of the peripheral wall portion of the exterior can to the side wall portion of the sealing can. That is, in the conventional structure in which the peripheral wall portion of the exterior can is caulked to the shoulder portion of the side wall portion of the sealing can and in which sealing is performed by pressing the sealing member between the open end portion of the side wall portion of the sealing can and the bottom portion of the exterior can, d2/d4 is a small value of about 0.9.

On the other hand, as in the configuration described above, the relationship between the inner diameter d2 of the open end portion in the peripheral wall portion of the exterior can and the external diameter d4 of the open end portion in the side wall portion of the sealing can satisfies 0.94 ≤ d2/d4 ≤ 1.02 so that sealing performance similar to that in the conventional structure can be obtained in a configuration fitted to the side wall portion of the sealing can in the radial direction. That is, the value of d2/d4 is set within the range described above so that the peripheral wall portion of the exterior can presses the thin sealing member in the radial direction with an appropriate force. Accordingly, it is possible to enhance sealing performance of the sealing member disposed between the peripheral wall portion of the exterior can and the side wall portion of the sealing can.

Thus, by setting d2/d4 in the above range, the sealing structure can be made compact. Accordingly, it is possible to reduce the size of the coin-type battery while increasing a housing space for housing an electrode body.

As a result, with the configuration described above, a compact coin-type battery capable of increasing the housing space for housing the electrode body can be obtained without impairing sealing properties. That is, the configuration described above can obtain a reliable coin-type battery having a large capacity.

In the first configuration, it is preferable to satisfy d3/d4 ≥ 0.85 (second configuration). The value of d3/d4 is set at 0.85 or more so that the projection dimension of the shoulder portion in the side wall portion of the sealing can can be reduced in the radial direction of the battery. Thus, since a dead space except for a space necessary for housing the electrode body can be reduced, a small-size coin-type battery having a larger capacity can be obtained. The value of d3/d4 is preferably 0.9 or more, and especially preferably 0.93 or more.

To ensure a certain degree of sealing properties between the film bottom portion and the bottom portion of the exterior can by setting the projection dimension of the shoulder portion at a predetermined dimension or more to generate a force with which open end portion of the side wall portion of the sealing can presses the film bottom portion against the bottom portion of the exterior can, the value of d3/d4 is preferably 0.98 or less.

In the first or second configuration, the resin film is preferably formed of a heat-resistant resin with a melting point or a decomposition temperature of which is 200 °C or more (third configuration). This configuration can obtain good sealing properties between the side wall portion of the sealing can and the peripheral wall portion of the exterior can even at high temperatures.

In the third configuration, the heat-resistant resin is preferably polyphenylene sulfide (fourth configuration). This configuration can reduce transmission of moisture in the resin film. As a result, durability of the battery can be enhanced.

In any one of the first through fourth configurations, a thickness of the resin film is preferably 0.05 mm to 0.15 mm (fifth configuration). With this configuration, a compact coin-type battery capable of increasing a housing space for housing the electrode body can be obtained.

Thickness variations and surface asperities of the resin film reduce adhesion between the peripheral wall portion of the exterior can and the resin film or reduce adhesion between the side wall portion of the sealing can and the resin film, and thus, moisture easily enters the battery. Thus, durability of the battery might decrease. On the other hand, the presence of the sealant at at least one of a position between the peripheral wall portion of the exterior can and the resin film or a position between the side wall portion of the sealing can and the resin film can reduce entering of moisture into the battery due to thickness variations and surface asperities of the resin film. As a result, durability of the battery can be enhanced.

A method for manufacturing a coin-type battery is a method for manufacturing a coin-type battery including: an exterior can including a bottom portion and a peripheral wall portion and having an opening on an opposite side to the bottom portion in a thickness direction; a sealing can which includes a flat portion and a side wall portion and has an opening on an opposite side to the flat portion in the thickness direction and of which a stepped shoulder portion that is located between the flat portion and the opening and expands in a radial direction is provided in the side wall portion; a resin film at least a portion of which is arranged between the peripheral wall portion of the exterior can and the side wall portion of the sealing can; and a power generation element arranged in a housing space formed by the exterior can and the sealing can. The resin film is a heat-shrinkable cylindrical member. The method includes the steps of: applying the sealant (50) at least either between the peripheral wall portion (12) of the exterior can (10) and the resin film (30) or between the side wall portion (22) of the sealing can (20) and the resin film (30); covering an outer peripheral surface of the side wall portion of the sealing can with the resin film such that an end portion of the resin film projects from the side wall portion of the sealing can; performing a heat treatment on the resin film and shrinking the resin film to thereby integrate the resin film with the side wall portion of the sealing can while covering an open end portion of the side wall portion of the sealing can with the resin film; disposing the side wall portion of the sealing can integrated with the resin film inside the peripheral wall portion of the exterior can to thereby locate the resin film between the peripheral wall portion of the exterior can and the side wall portion of the sealing can and between the bottom portion of the exterior can and the side wall portion of the sealing can; and displacing the peripheral wall portion of the exterior can in a radial direction relative to the side wall portion of the sealing can to thereby fit the peripheral wall portion of the exterior can and the side wall portion of the sealing can to each other and, in a state before the peripheral wall portion of the exterior can and the side wall portion of the sealing can are fitted together, when it is assumed that a height of the sealing can is h1 (mm), in the side wall portion of the sealing can, an external diameter of the open end portion is d5 (mm), an external diameter and a can thickness at a position of 7/10 of h1 from a tip of the open end portion toward the flat portion are d6 (mm) and t1 (mm), respectively, and a can thickness at a position of 1/2 of t1 from the tip of the open end portion toward the flat portion is t2 (mm), -0.1 ≤ d5-d6 ≤ 0.1 and t2/t1 ≥ 0.9 are preferably satisfied (first method).

This method can easily obtain a coin-type battery in which at least part of the resin film is disposed between the peripheral wall portion of the exterior can and the side wall portion of the sealing can.

That is, the resin film as a heat-shrinkable cylindrical member is subjected to a heat treatment to be contracted while projecting from the side wall portion of the sealing can and covering the outer peripheral surface of the side wall portion so that the resin film shrinks in the radial direction and is changed into a shape conforming to the side wall portion of the sealing can and part of the resin film projecting from the side wall portion of the sealing can is bent inward in the radial direction. Accordingly, while the resin film covers the open end portion of the side wall portion of the sealing can, the resin film can be integrated with the side wall portion of the sealing can. In addition, in a state where the side wall portion of the sealing can integrated with the resin film is disposed inside the peripheral wall portion of the exterior can, the peripheral wall portion of the exterior can is displaced from the side wall portion of the sealing can in the radial direction so that the peripheral wall portion of the exterior can and the side wall portion of the sealing can can be fitted to each other. This method can obtain a coin-type battery in which at least part of the resin film is disposed between the peripheral wall portion of the exterior can and the side wall portion of the sealing can.

In the first method, a temperature at which the heat treatment is performed on the resin film is preferably higher than a temperature of a glass transition point of the resin film (second method). With this method, heat contraction of the resin film is promoted so that the resin film and the side wall portion of the sealing can can be more firmly integrated.

In the first or second method, in the step of covering the outer peripheral surface of the side wall portion of the sealing can with the resin film, the resin film covering the outer peripheral surface of the side wall portion of the sealing can is preferably caused to project from the open end portion of the side wall portion of the sealing can to a range of 0.3 mm to 2 mm (third method).

That is, in a case where the width of the resin film projecting from the open end portion of the side wall portion of the sealing can is 0.3 mm or more, the open end portion of the side wall portion of the sealing can can be more easily covered with the resin film during the heat treatment on the resin film. On the other hand, in a case where the width of the resin film projecting from the open end portion of the side wall portion of the sealing can is 2 mm or less, the width of the film bottom portion formed in the heat treatment on the resin film can be adjusted in a suitable range.

In any one of the first through third methods, in the step of integrating the resin film with the side wall portion of the sealing can by performing the heat treatment on the resin film and shrinking the resin film, a portion of the resin film projecting from the open end portion of the side wall portion of the sealing can is preferably deformed inward in the side wall portion relative to the open end portion and, thereby, the resin film projects inward in the side wall portion from the open end portion to a range of 0.1 mm to 1.5 mm (fourth method).

In a case where the width of the resin film projecting inward from the open end portion of the side wall portion of the sealing can is 0.1 mm or more, it is further ensured to cover the open end portion of the side wall portion of the sealing with the resin film. Accordingly, in the coin-type battery, it is further ensured to dispose the resin film between the bottom portion of the exterior can and the open end portion of the side wall portion of the sealing can. Thus, it is possible to ensure electrical insulation between the bottom portion of the exterior can and the open end portion of the side wall portion of the sealing can.

On the other hand, in a case where the width of the resin film projecting inward in the side wall portion from the open end portion of the side wall portion of the sealing can is 1.5 mm or less, a redundant volume of the resin film disposed in the battery can be reduced. As a result, a decrease in an effective volume of the housing space of the electrode body in the battery can be prevented.

### ADVANTAGEOUS EFFECTS OF INVENTION

By using a coin-type battery according to an embodiment of the present invention and a manufacturing method thereof, a coin-type battery a capacity of which has been increased by increasing a housing space in which an electrode body is housed and which has excellent reliability can be achieved without impairing sealing properties.

### BRIEF DESCRIPTION OF DRAWINGS

[FIG. 1] FIG. 1 is a cross-sectional view illustrating an outline structure of an embodiment of a coin-type battery that is formed by a manufacturing method of a coin-type battery according to the present invention.
[FIG. 2] FIG. 2 is a partial enlarged cross-sectional view illustrating an enlarged cross-section of a structure of an electrode body in the coin-type battery illustrated in FIG. 1.
[FIG. 3] FIG. 3 is an end view illustrating an outline structure of a sealing can that is used for a coin-type battery according to the present invention.
[FIG. 4] FIG. 4 is an enlarged partial cross-sectional view illustrating an enlarged cross section of a main portion of a side wall portion of a sealing can that is used for a coin-type battery according to the present invention.
[FIG. 5] FIG. 5 is an enlarged partial cross-sectional view illustrating an enlarged cross section of a main portion of a side wall portion of a sealing can that is used for a comparison example of a coin-type battery.
[FIG. 6] FIG. 6 is a perspective view illustrating an outline structure of a resin film that is used for a coin-type battery according to the present invention.
[FIG. 7] FIG. 7 is an end view illustrating a state where a side wall portion of a sealing can is covered with the resin film.
[FIG. 8] FIG. 8 is an end view illustrating a state where the resin film is integrated with the side wall portion of the sealing can.
[FIG. 9] FIG. 9 is a plan view illustrating an outline structure of a positive electrode.
[FIG. 10] FIG. 10 is a plan view illustrating an outline structure of a negative electrode.
[FIG. 11] FIG. 11 is a plan view illustrating an outline structure of an electrode body.
[FIG. 12] FIG. 12 is an end view illustrating an outline structure of a gasket that is used for a coin-type battery according to First Comparative Example.

### DESCRIPTION OF EMBODIMENTS

Embodiments of the present invention will be described in detail with reference to the accompanying drawings. In the drawings, the same or corresponding parts are denoted by the same reference sign and the description of the parts is not repeated.

### <Entire Structure>

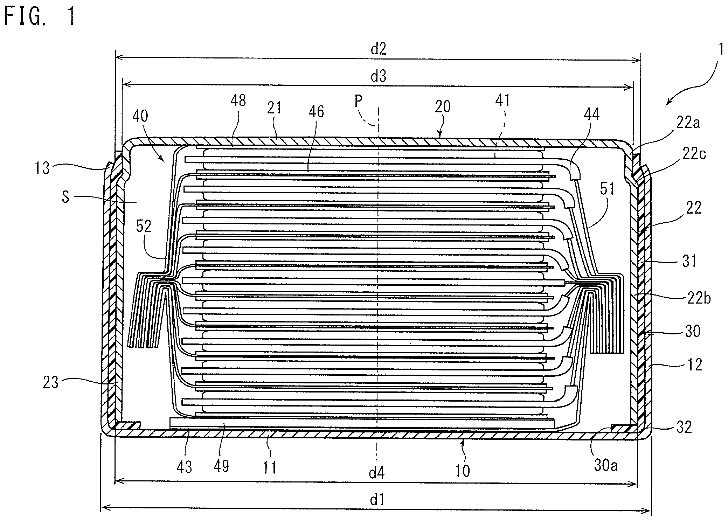

FIG. 1 is a cross-sectional view illustrating an outline structure of an embodiment of a coin-type battery that is formed by a manufacturing method of a coin-type battery according to the present invention. This coin-type battery 1 includes a positive electrode can 10 as an exterior can having a closed end cylindrical shape, a negative electrode can 20 as a sealing can that covers an opening of the positive electrode can 10, a resin film 30 that is sandwiched between the positive electrode can 10 and the negative electrode can 20, and an electrode body 40 (a power generation element) that is housed in a housing space S formed by the positive electrode can 10 and the negative electrode can 20. Therefore, the coin-type battery 1 is made into a flat coin shape in which a dimension in a radial direction is larger than a dimension in a height direction by fitting the positive electrode can 10 and the negative electrode can 20 together. In the housing space S that is formed by the positive electrode can 10 and the negative electrode can 20 of the coin-type battery 1, in addition to the electrode body 40, a non-aqueous electrolyte (not illustrated) is also sealed. Note that the reference sign P in FIG. 1 denotes an axis of the coin-type battery 1. In the following description, in the coin-type battery 1, an axial direction is the height direction and a direction that is orthogonal to the axial direction is the radial direction.

The positive electrode can 10 is made of a metallic material, such as stainless (for example, SUS316 or the like). Ni-plating can be applied to an outer surface of the positive electrode can 10 and the positive electrode can 10 is formed to have a closed end cylindrical shape by press-forming. The positive electrode can 10 includes a circular bottom portion 11 and a cylindrical peripheral wall portion 12 formed continuously from an outer periphery of the bottom portion 11. The peripheral wall portion 12 is provided so as to extend from an outer peripheral end of the bottom portion 11 in the height direction of the coin-type battery 1 in a longitudinal-sectional view (a state illustrated in FIG. 1). That is, the peripheral wall portion 12 extends from the bottom portion 11 in the axial direction. Also, the positive electrode can 10 has an opening on an opposite side to the bottom portion 11 in the axial direction.

As will be described later, in a state in which the resin film 30 is sandwiched between the positive electrode can 10 and the negative electrode can 20, an open end portion 13 (an end portion of the peripheral wall portion 12, which is located closer to the opening) of the peripheral wall portion 12 is deformed so as to tilt inwardly in a radial direction of the positive electrode can 10, and thereby, the positive electrode can 10 is caulked to the negative electrode can 20.

The negative electrode can 20 is also made of a metallic material, such as stainless (for example, NAS64 or the like). Ni-plating can be applied to an outer surface of the negative electrode can 20 and the negative electrode can 20 is formed to have a closed-end cylindrical shape by press-forming. The negative electrode can 20 includes a substantially cylindrical side wall portion 22 an external diameter of which is smaller than that of the peripheral wall portion 12 of the positive electrode can 10 and a circular flat portion 21 that closes one of openings of the side wall portion 22. Similar to the positive electrode can 10, the side wall portion 22 is provided so as to extend from an outer peripheral end of the flat portion 21 in the height direction of the coin-type battery 1 in the longitudinal-sectional view. That is, the side wall portion 22 extends from the flat portion 21 in the axial direction. Also, the negative electrode can 20 has an opening on an opposite side to the flat portion 21 in the axial direction.

Note that the side wall portion 22 extends in the axial direction without being folded in an edge portion. That is, the negative electrode can 20 is a so-called straight can without a fold portion in the edge portion of the side wall portion 22.

A diameter expansion portion 22b a diameter of which is larger than that of a base end portion 22a that is located closer to the flat portion 21 is formed in the side wall portion 22. That is, in the side wall portion 22, a stepped shoulder portion 22c that expands in the radial direction is formed between the base end portion 22a and the diameter expansion portion 22b. In the structure of this embodiment, the peripheral wall portion 12 of the positive electrode can 10 is pressed against the side wall portion 22 in the radial direction in a state in which the resin film 30, which will be described later, is sandwiched therebetween.

Note that, in the peripheral wall portion 12 of the positive electrode can 10, the open end portion 13 is largely displaced in the radial direction, as compared to the other portions of the peripheral wall portion 12, and thereby, a portion of a pressing force by the peripheral wall portion 12 of the positive electrode can 10 can be also applied to the shoulder portion 22c of the negative electrode can 20. Therefore, an open end portion 23 (an end portion of the side wall portion 22, which is located closer to the opening) of the side wall portion 22 of the negative electrode can 20 sandwiches a film bottom portion 32 of the resin film 30, which will be described later, with the bottom portion 11 of the positive electrode can 10.

Next, embodiments that are considered suitable for realizing an increased capacity and excellent sealing properties in a coin-type battery 1 that is formed by a manufacturing method of a coin-type battery according to the present invention will be specifically described below.

An external diameter d1 of the bottom portion 11 of the positive electrode can 10 and an external diameter d3 of the flat portion 21 of the negative electrode can 20 preferably satisfy 0.87 ≤ d3/d1 ≤ 0.935.

In this embodiment, the external diameter d1 of the bottom portion 11 of the positive electrode can 10 is substantially equal to an external diameter of the coin-type battery 1. Therefore, a ratio of an internal space of the negative electrode can 20 to an actual volume (a volume that is calculated from external dimensions of the coin-type battery 1) of the coin-type battery 1 can be increased by making the external diameter d3 of the flat portion 21 of the negative electrode can 20 to be 87% or more of the external diameter d1 of the bottom portion 11 of the positive electrode can 10. That is, a ratio of the housing space S of the electrode body 40 to the actual volume of the coin-type battery 1 can be made large by causing d3/d1 ≥ 0.87 to be satisfied. Thus, a battery capacity of the coin-type battery 1 can be increased.

On the other hand, the external diameter d3 of the flat portion 21 of the negative electrode can 20 is preferably 93.5% or less of the external diameter d1 of the bottom portion 11 of the positive electrode can 10 and is more preferably 93% or less. Thus, the open end portion 13 of the peripheral wall portion 12 of the positive electrode can 10 can be displaced by a certain amount or more in the radial direction and thus be caulked to the side wall portion 22 of the negative electrode can 20. Therefore, in the coin-type battery 1, good sealing properties can be ensured.

An external diameter d4 of the open end portion 23 in the side wall portion 22 of the negative electrode can 20 and an inner diameter d2 of the open end portion 13 in the peripheral wall portion 12 of the positive electrode can 10 that is in a state of being caulked to the negative electrode can 20 with the resin film 30 sandwiched therebetween preferably satisfy 0.94 ≤ d2/d4 ≤ 1.02.

A relation between the external diameter d4 of the open end portion 23 in the side wall portion 22 of the negative electrode can 20 and the inner diameter d2 of the open end portion 13 in the peripheral wall portion 12 of the positive electrode can 10 varies depending on a fitting structure of the peripheral wall portion 12 of the positive electrode can 10 with respect to the side wall portion 22 of the negative electrode can 20. For example, in a structure of a known coil-type battery in which a peripheral wall portion of a positive electrode can is caulked to a shoulder portion of a side wall portion of a negative electrode can and a gasket is pressed between an open end portion of a side wall portion of a sealing can and a bottom portion of an exterior can, thereby sealing the battery, a value of d2/d4 is a small value, that is, about 0.9.

In contrast, in this embodiment, the peripheral wall portion 12 of the positive electrode can 10 is displaced in the radial direction, and thereby, the peripheral wall portion 12 of the positive electrode can 10 is pressed against the side wall portion 22 of the negative electrode can 20. That is, the peripheral wall portion 12 of the positive electrode can 10 is fitted to the side wall portion 22 of the negative electrode can 20 in the radial direction.

In the above described fitting structure, the relation between the inner diameter d2 of the open end portion 13 in the peripheral wall portion 12 of the positive electrode can 10 and the external diameter d4 of the open end portion 23 in the side wall portion 22 of the negative electrode can 20 is made to satisfy 0.94 ≤ d2/d4 ≤ 1.02, and thereby, the peripheral wall portion 12 of the positive electrode can 10 presses the resin film 30 in the radial direction with the appropriate force. Thus, sealing properties of the resin film 30 arranged between the peripheral wall portion 12 of the positive electrode can 10 and the side wall portion 22 of the negative electrode can 20 can be improved.

When the value of d2/d4 is smaller than 0.94, a pressing force is concentrated on a portion such as the open end portion 23 of the side wall portion 22 of the negative electrode can 20. Thus, a force with which the peripheral wall portion 12 of the positive electrode can 10 presses the resin film 30 in the radial direction decreases so that sealing performance of the entire battery decreases, whereas in a case where a force with which the open end portion 23 of the negative electrode can 20 presses the resin film 30 in the axial direction is large, the open end portion 23 of the negative electrode can 20 might touch the bottom portion 11 of the positive electrode can 10 by breaking the resin film 30 to thereby cause a short circuit.

On the other hand, when the value of d2/d4 is larger than 1.02, caulking between the peripheral wall portion 12 of the positive electrode can 10 and the side wall portion 22 of the negative electrode can 20 is insufficient. Therefore, also in this case, there is a probability that the sealing properties of the entire battery are reduced.

Furthermore, the external diameter d3 of the flat portion 21 of the negative electrode can 20 and the external diameter d4 of the open end portion 23 in the side wall portion 22 of the negative electrode can 20 preferably satisfy d3/d4 ≥ 0.85.

Also, a relation between the external diameter d3 of the flat portion 21 of the negative electrode can 20 and the external diameter d4 of the open end portion 23 in the side wall portion 22 of the negative electrode can 20 varies depending on the fitting structure of the peripheral wall portion 12 of the positive electrode can 10 with respect to the side wall portion 22 of the negative electrode can 20. For example, in a structure of a known coin-type battery in which a peripheral wall portion of a positive electrode can is caulked to a shoulder portion of a side wall portion of a negative electrode can, the shoulder portion is designed to have a certain width dimension or more. In the known coin-type battery, the value of d3/d4 in is about 0.8.

In contrast, in this embodiment, as described above, the peripheral wall portion 12 of the positive electrode can 10 is fitted to the side wall portion 22 of the negative electrode can 20 in the radial direction. Therefore, in the radial direction of the coin-type battery 1, a projection dimension of the shoulder portion 22c in the side wall portion 22 of the negative electrode can 20 can be made small, as compared to a known structure, a dead space other than a necessary space used for housing the electrode body 40 can be reduced, and the capacity of the battery can be increased. From the above described viewpoint, the value of d3/d4 is more preferably 0.9 or more and, particularly, is preferably 0.93 or more.

However, the shoulder portion 22c the projection dimension of which is made to be a predetermined dimension or more causes the open end portion 23 of the side wall portion 22 of the negative electrode can 20 to generate a force that presses a film bottom portion 32, which will be described later, against the bottom portion 11 of the positive electrode can 10, and therefore, in order to ensure constant sealing properties between the film bottom portion 32 and the bottom portion 11 of the positive electrode can 10, the value of d3/d4 is preferably 0.98 or less.

As described above, the fitting structure in the coin-type battery 1 can be downsized by making the projection dimension of the shoulder portion 22c in the side wall portion 22 of the negative electrode can 20 smaller in the radial direction of the coin-type battery 1. Therefore, it is possible to realize downsizing of the coin-type battery 1 while increasing the housing space S in which the electrode body 40 is housed.

Note that, in this embodiment, the term "external diameter" means a diameter of a target portion in an outermost circumference position in a radial direction. The term "inner diameter" means a diameter of a target portion in an innermost position in the radial direction. In FIG. 1, the dimensions of d1 to d4 are specifically illustrated.

In order to increase the ratio of the housing space S of the electrode body 40 to the actual volume of the coin-type battery 1, a value of d3/d1 is more preferably 0.89 or more and, particularly, is preferably 0.9 or more. On the other hand, in order to provide better caulking of the open end portion 13 in the peripheral wall portion 12 of the positive electrode can 10 and thereby improve sealing properties, the value of d3/d1 is more preferably 0.93 or less, particularly, is preferably 0.925 or less, and is most preferably 0.92 or less.

Also, in order to provide a better pressing force by the peripheral wall portion 12 of the positive electrode can 10 in the radial direction, the value of d2/d4 is more preferably 0.95 or more and, particularly, is preferably 0.96 or more. On the other hand, in order to ensure a necessary caulking amount, the value of d2/d4 is more preferably 1.01 or less and, particularly, is preferably 1 or less.

The resin film 30 can be formed of, for example, polyphenylene sulfide (PPS), poly ether ether ketone (PEEK), tetrafluoroethylene-perfluoroalkoxy-ethylene copolymer (PFA), polypropylene (PP), or the like. The resin film 30 is preferably formed of a heat-resistant resin, such as PPS, with a melting point or a decomposition temperature of which is 200 °C or more to prevent reduction in sealing properties at high temperature.

The resin film 30 is a heat-shrinkable cylindrical resin member. The resin film 30 has a thickness of about 0.1 mm, for example. To ensure good sealing properties, the thickness of the resin film 30 is preferably 0.05 mm or more, for example. To increase the volume of the housing space S of the electrode body 40, the thickness of the resin film 30 is preferably 0.15 mm or less, for example.

The resin film 30 may be a commercially available heat-shrinkable film made of the resin described above. That is, the resin film 30 is preferably a cylindrical heat-shrinkable tube, for example.

The resin film 30 is integrated with the outer surface of the side wall portion 22 of the negative electrode can 20 by a heat treatment, which will be described later. The resin film 30 after the heat treatment includes a film peripheral wall portion 31 located on the outer surface of the side wall portion 22 of the negative electrode can 20, and a film bottom portion 32 located on the open end portion 23 of the side wall portion 22 of the negative electrode can 20. The shape of the resin film 30 before the heat treatment may be any shape except for the cylindrical shape as long as the resin film 30 can be integrated with the outer surface of the side wall portion 22 of the negative electrode can 20.

As illustrated in FIG. 1, the resin film 30 is located outside the side wall portion 22 of the negative electrode can 20 in a state in which the resin film 30 is sandwiched between the positive electrode can 10 and the negative electrode can 20. The film peripheral wall portion 31 is formed to have a cylindrical shape that extends in the axial direction, along the outer surface of the side wall portion 22 of the negative electrode can 20. The film peripheral wall portion 31 is arranged between the peripheral wall portion 12 of the positive electrode can 10 and the side wall portion 22 of the negative electrode can 20. The film bottom portion 32 is formed to have an annular shape that extends from one of end portions of the film peripheral wall portion 31 in the axial direction toward inside of the film peripheral wall portion 31. That is, the resin film 30 has a hole 30a surrounded by the film bottom portion 32. Thus, the resin film 30 is formed as an annular body which has a hook-shaped cross section. The film bottom portion 32 is sandwiched between the open end portion 23 in the side wall portion 22 of the negative electrode can 20 and the bottom portion 11 of the positive electrode can 10.

Although not specifically shown, sealants are disposed between the resin film 30 and the peripheral wall portion 12 of the positive electrode can 10, and between the resin film 30 and the side wall portion 22 of the negative electrode can 20. A material for each sealant is not specifically limited as long as the material has resistance to an electrolyte and has a low moisture permeability. A commercially available sealant may be various products used as moisture-proof coating agents and including, for example, "ELEP COAT" (registered trademark) produced by Nitto Shinko Corporation, "HumiSeal" (registered trademark) produced by AIRBROWN Co., Ltd., "Hayacoat" (registered trademark) produced by Sunhayato Corp., and "Fluorosurf" (registered trademark) produced by FluoroTechnology Co.,LTD.

In the resin film 30, thickness variations and surface asperities tend to occur in a heat treatment, and thus, adhesion cannot be sufficiently obtained between the peripheral wall portion 12 of the positive electrode can 10 and the resin film 30 or between the side wall portion 22 of the negative electrode can 20 and the resin film 30 in some cases. For this reason, as compared to the case of using a resin gasket as a sealing member, sealing properties easily degrade, and durability of the battery easily decreases because of entering of moisture.

On the other hand, those problems derived from the resin film 30 can be solved by disposing the sealant at least one of, and preferably both, a position between the resin film 30 and the peripheral wall portion 12 of the positive electrode can 10 and a position between the resin film 30 and the side wall portion 22 of the negative electrode can 20. Thus, entering of moisture into the battery can be reduced so that durability of the battery can be enhanced.

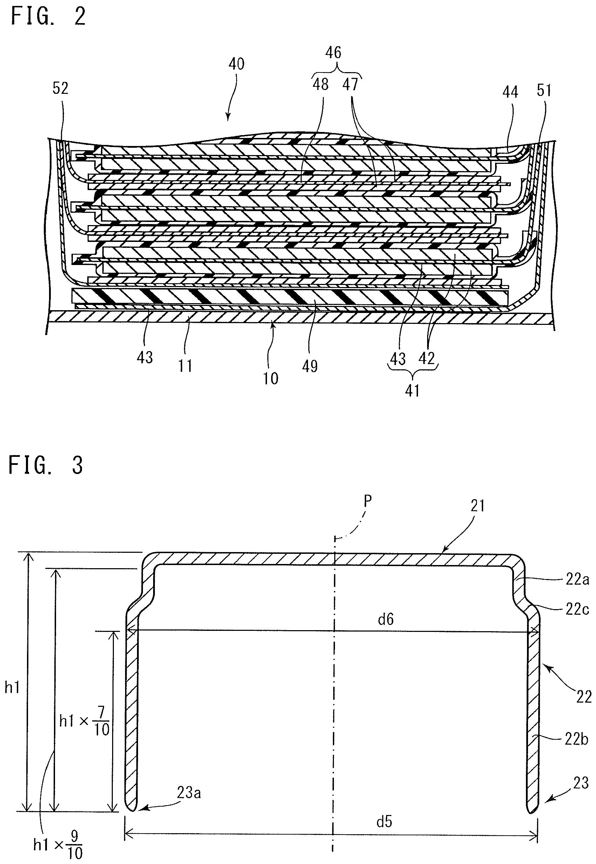

As illustrated also in FIG. 2, the electrode body 40 is formed by alternately stacking a substantially disk-shaped positive electrode 41 which is housed in a bag-shaped separator 44 and a substantially disk-shaped negative electrode 46 in the height direction of the coin-type battery 1. Thus, the electrode body 40 as a whole has a substantially columnar shape that extends in the axial direction. Also, the electrode body 40 is formed by stacking the positive electrodes 41 and the negative electrodes 46 such that both end surfaces of the electrode body 40 in the axial direction are negative electrodes.

As illustrated in FIG. 2, the positive electrode 41 is a member in which a positive electrode active material layer 42 containing a positive electrode active material, such as, for example, lithium cobalt oxide or the like, is formed on both sides of a positive electrode current collector 43 made of a metal foil, such as aluminum or the like.

As illustrated in FIG. 2, the negative electrode 46 is a member in which a negative electrode active material layer 47 containing a negative electrode active material, such as graphite or the like, is formed on both sides of a negative electrode current collector 48 made of a metal foil, such as copper or the like. However, each of the negative electrodes that are located in both of end portions of the substantially columnar electrode body 40 in an axial direction has the negative electrode active material layer 47 on only one surface side of the negative electrode current collector 48 such that the negative electrode current collectors 48, 48 are located in the end portions of the electrode body 40 in the axial direction. That is, the negative electrode current collectors 48, 48 are exposed at both ends of the substantially columnar electrode body 40. One of the negative electrode current collectors 48 of the electrode body 40 is positioned on the bottom portion 11 of the positive electrode can 10 via the positive electrode current collector 43 and an insulation sheet 49 (see FIG. 1 and FIG. 2). The other negative electrode current collector 48 of the electrode body 40 contacts on the flat portion 21 of the negative electrode can 20 in a state in which the electrode body 40 is arranged between the positive electrode can 10 and the negative electrode can 20 (see FIG. 1).

The separator 44 is a bag-shaped member that is formed to have a substantially circular shape in a plan view and is formed to have a size with which the separator 44 can house the substantially disk-shaped positive electrode 41. The separator 44 is formed of a microporous thin film made of polyethylene that is excellent in electrical insulation properties. As described above, the separator 44 is formed of a microporous thin film, and thus, lithium ions can permeate the separator 44. The separator 44 is formed by bonding peripheral portions of the two substantially circular microporous thin films by heat welding or the like.

As illustrated in FIG. 1 and FIG. 2, in the positive electrode current collector 43 of the positive electrode 41, a conductive positive electrode lead 51 that extends toward the outside of the positive electrode current collector 43 in a plan view is integrally formed therewith. A portion of the positive electrode lead 51, which is located closer to the positive electrode current collector 43, is also covered by the separator 44. Note that the positive electrode current collector 43 in which the positive electrode active material layer 42 is not provided is arranged between the insulation sheet 49 and the bottom portion 11 of the positive electrode can 10. That is, the positive electrode current collector 43 electrically contacts the bottom portion 11 of the positive electrode can 10.

In the negative electrode current collector 48 of the negative electrode 46, a conductive negative electrode lead 52 that extends toward the outside of the negative electrode current collector 48 in a plan view is integrally formed therewith.

As illustrated in FIG. 1 and FIG. 2, the positive electrodes 41 and the negative electrodes 46 are stacked such that the positive electrode lead 51 of each of the positive electrodes 41 is located in one side and the negative electrode lead 52 of each of the negative electrodes 46 is located on an opposite side to the positive electrode lead 51.

As described above, in a state in which the plurality of positive electrodes 41 and negative electrodes 46 is stacked in the height direction of the coin-type battery 1, the plurality of positive electrode leads 51 is connected to one another by ultrasonic welding or the like, in a state in which edge sides thereof are superposed on one another in the height direction. Thus, the plurality of positive electrodes 41 is electrically connected to one another via the plurality of positive electrode lead 51 and each of the positive electrodes 41 and the positive electrode can 10 are electrically connected to one another. On the other hand, the plurality of negative electrode leads 52 is connected to one another by ultrasonic welding or the like, in a state in which edge sides thereof are superposed on one another in the height direction. Thus, the plurality of negative electrodes 46 is electrically connected to one another via the plurality of negative electrode leads 52 and each of the negative electrodes 46 and the negative electrode can 20 are electrically connected to one another.

### (Manufacturing Method of Coin-type Battery)

Next, a manufacturing method of the coin-type battery 1 according to the present invention, which is performed for manufacturing the coin-type battery 1 that has the above described structure, will be described.

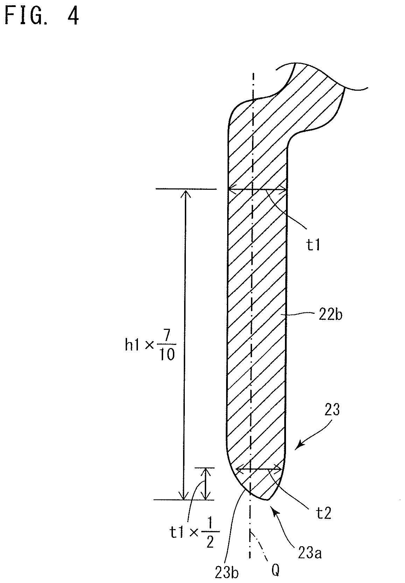

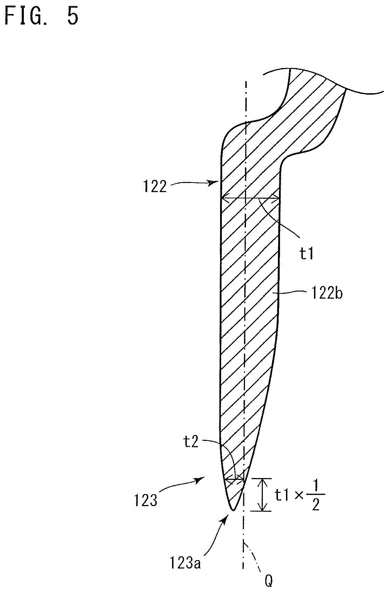

FIG. 3 is a cross-sectional view illustrating an outline structure of a sealing can (a negative electrode can) that is used for assembling a battery. FIG. 4 and FIG. 5 are enlarged partial cross-sectional views each illustrating an enlarged cross section of an enlarged diameter portion of a side wall portion of the sealing can. FIG. 4 is an enlarged cross-sectional view illustrating an embodiment of a side wall portion of a sealing can that is used in a manufacturing method of a coin-type battery according to the present invention and FIG. 5 is an enlarged partial cross-sectional view illustrating an example of a side wall portion of a known sealing can.

As described above, the sealing can includes the substantially cylindrical side wall portion 22 and the circular flat portion 21 that closes one of openings of the side wall portion 22. The side wall portion 22 is provided so as to extend from an outer peripheral end of the flat portion 21 in a direction (a height direction) which is orthogonal to the flat portion 21 in a longitudinal-sectional view. That is, the side wall portion 22 extends from the flat portion 21 in the height direction. The sealing can has an opening on an opposite side to the flat portion 21 in the height direction. Note that the reference sign P in FIG. 3 denotes an axis that extends in the height direction of the sealing can.

Also, as described above, the side wall portion 22 includes the base end portion 22a that is located closer to the flat portion 21, the diameter expansion portion 22b that is located closer to the open end portion 23, and the shoulder portion 22c that is formed therebetween. A position in which the shoulder portion 22c is formed is preferably a position that is as close to the flat portion 21 as possible in order to increase the internal volume of the battery. That is, the diameter expansion portion 22b is preferably made as large as possible in the height direction. Specifically, when the height of the sealing can is h1 (mm), the diameter expansion portion 22b may be formed in a position higher than 7/10 of h1. That is, when, in the side wall portion 22 of the sealing can, the external diameter of the open end portion 23 is d5 (mm) and the external diameter in a position located at 7/10 of h1 from an edge 23a of the open end portion 23 toward the flat portion 21 is d6 (mm), the position of the shoulder portion 22c in the height direction is preferably a position in which d5 and d6 are the same. Note that, in reality, considering a manufacture tolerance, the diameter expansion portion 22b may be formed such that -0.1 ≤ d5 - d6 ≤ 0.1 is satisfied.

On the other hand, when the position of the shoulder portion 22c is too close to the flat portion 21, sealing by the exterior can is difficult. Therefore, in the side wall portion 22, a portion located at 9/10 of h1 from the edge 23a of the open end portion 23 toward the flat portion 21 is preferably the base end portion 22a.

As illustrated in FIG. 5, a case where a tip 123a of the open end portion 123 has an acute shape tends to have problems such as damage of the inner side of the peripheral wall portion 12 of the positive electrode can 10 by the tip 123a of the open end portion 123 that interrupts the resin film 30 in fitting, into the peripheral wall portion 12 of the positive electrode can 10, the side wall portion 122 of the sealing can integrated with the resin film 30, and breakage in the resin film 30 in pressing the film bottom portion 32 by the tip 123a of the open end portion 123. Thus, a leakage easily occurs in an assembled battery. In view of this, as illustrated in FIG. 4, the tip of the side wall portion of the sealing can preferably has a cross-sectional shape whose outer shape is curved in a vertical cross section. Character Q in FIGS. 4 and 5 indicates a center line representing a center position of the thickness of the diameter expansion portion 22b or 122b in the radial direction.

In order not to make the shape of the edge 23a of the open end portion 23 with a sharp angle as much as possible, the sealing can may be formed such that, when a can thickness of the sealing can in a position at 7/10 of h1 from the edge 23a of the open end portion 23 toward the flat portion 21 is t1 (mm), the can thickness is maintained up to a position that is as close to the edge 23a of the open end portion 23 as possible.

Specifically, the edge 23a may be formed such that, when the can thickness in a position at 1/2 of t1 from the edge 23a of the open end portion 23 toward the flat portion 21 is t2 (mm), t2/t1 ≥ 0.9 is satisfied. In general, an upper limit of a value of t2/tl is 1 but, considering the manufacture tolerance or the like, the value of t2/t1 may be a value that is slightly larger than 1.

The above described problems are less likely to occur when the edge 23a of the open end portion 23 is located in a position closer to the inner circumferential side in the radial direction than the central line Q, as illustrated in FIG. 4, than when the edge 23a of the open end portion 23 is located in a position closer to the outer circumferential side in the radial direction than the central line Q, as illustrated in FIG. 5. Therefore, the edge 23a of the open end portion 23 is preferably formed in a position closer to the inner circumferential side in the radial direction than the central line Q in the radial direction.

Furthermore, as illustrated in FIG. 4, R is provided in an outer circumference side prat 23b of the open end portion 23, and thereby, the generation of above described problems can be further suppressed. The curvature radius of R of the open end portion 23 is not particularly limited but, considering processability as well, it is considered that the curvature radius may be about 0.01 to 0.5 mm.

The sealing can that has the above described shape can be obtained by press-forming by adjusting well-known conditions when press-forming is performed.

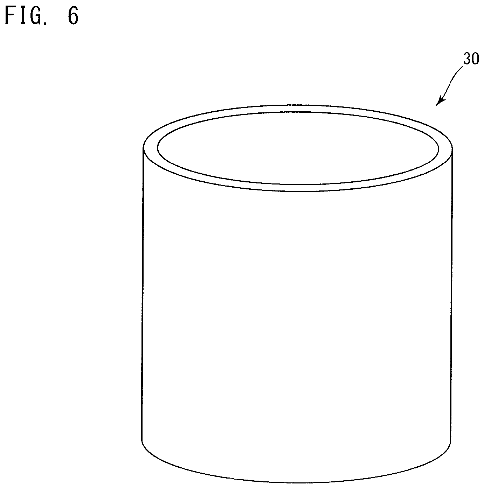

As illustrated in FIG. 6, the resin film 30 for use in assembly of a battery is a heat-shrinkable cylindrical resin member.

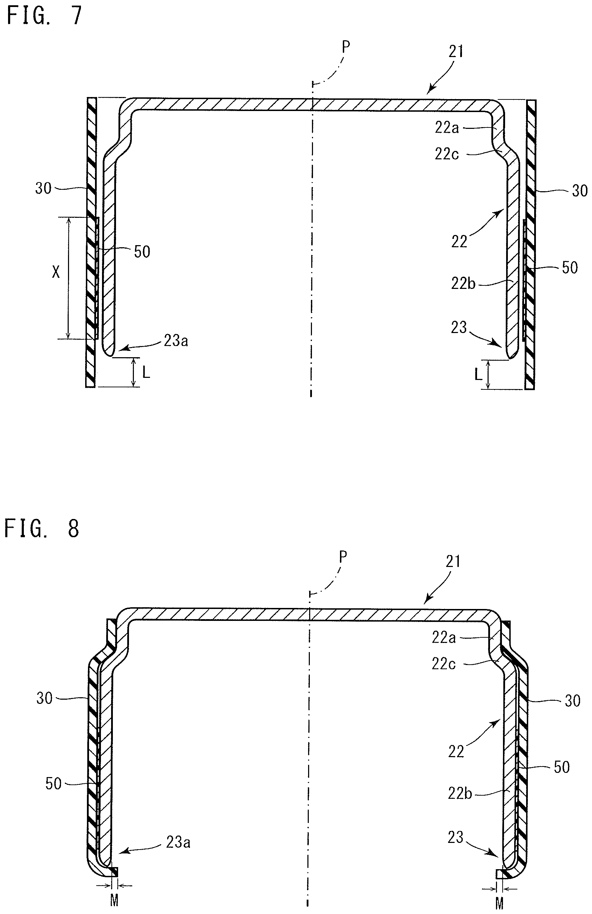

FIG. 7 illustrates a state where the side wall portion 22 of the sealing can is covered with the resin film 30 before a heat treatment in assembly of a battery. FIG. 8 illustrates a state where the cylindrical resin film 30 is subjected to a heat treatment to be integrated with the side wall portion 22 of the sealing can in assembly of a battery.

As illustrated in FIG. 7, the cylindrical resin film 30 before the heat treatment is disposed to cover the side wall portion 22 of the sealing can. This process corresponds to the step of covering the outer peripheral surface of the side wall portion 22 of the sealing can with the resin film. The inner diameter of the resin film 30 is adjusted to establish d7 > d5 where d7 (mm) is an inner diameter of the cylindrical resin film 30 before the heat treatment. That is, the inner diameter of the resin film 30 is larger than the external diameter of the open end portion 23 of the side wall portion 22 of the sealing can. To increase adhesion of the resin film 30 to the side wall portion 22 of the sealing can in the heat treatment, the difference between d7 and d5 is preferably 0.5 mm or less.

As illustrated in FIG. 7, in covering the side wall portion 22 of the sealing can with the cylindrical resin film 30 before the heat treatment, the resin film 30 is disposed to the side wall portion 22 of the sealing can such that one end of the resin film 30 in the cylinder axis direction projects from the open end portion 23 of the side wall portion 22 of the sealing can (where the projection length is indicated by L in FIG. 7). At this time, the resin film 30 may be cut at a predetermined position in the cylinder axis direction such that one end of the resin film 30 in the cylinder axis direction projects from open end portion 23 of the side wall portion 22 of the sealing can. In the heat treatment on the resin film 30, the projecting portion of the resin film 30 is contracted by heat and bent inward in the radial direction to thereby cover the open end portion 23 of the side wall portion 22 of the sealing can. To cover the open end portion 23 with the resin film 30 more sufficiently, the projection length L is preferably 0.3 mm or more, and more preferably 0.5 mm or more. On the other hand, to prevent an excessive increase in the width of a film bottom portion formed by the heat treatment, the projection length L is preferably 2 mm or less, more preferably 1 mm or less, and especially preferably 0.8 mm or less.

The resin film 30 is disposed to the side wall portion 22 of the sealing can such that the other end portion of the resin film 30 in the cylinder axis direction is located at the same position as the flat portion 21 of the sealing can in the cylinder axis direction, for example. At this time, the resin film 30 may be cut at a predetermined position in the cylinder axis direction such that the other end portion in the cylinder axis direction is located at the same position as the flat portion 21 of the sealing can in the cylinder axis direction. It is sufficient that after sealing by caulking the peripheral wall portion of the exterior can (positive electrode can 10) to the side wall portion 22 of the sealing can, the resin film 30 is present between the open end portion of the peripheral wall portion of the exterior can and the sealing can so that electrical insulation can be obtained. Thus, the position of the other end portion of the resin film 30 in the cylinder axis direction can be appropriately adjusted as necessary.

To enhance sealing properties after the sealing, a sealant 50 is preferably applied to the inner peripheral surface of the resin film 30 before the side wall portion 22 of the sealing can is covered with the resin film 30. The sealant 50 may be previously applied to at least one of the inner peripheral surface or the outer peripheral surface of the resin film 30. The sealant 50 may be applied to the outer peripheral surface of the side wall portion 22 of the sealing can. The sealant 50 may be applied to the inner peripheral surface of the peripheral wall portion of the exterior can.

The width to which the sealant 50 is applied (indicated by X in FIG. 7) is not specifically limited as long as the advantage of enhancement of sealing properties (suppression of moisture entering) can be obtained, but in general, the width is preferably 1 mm or more, and more preferably 2 mm or more. The sealant 50 may be applied to the entire surface of a portion of the resin film 30 that touches the side wall portion 22 of the sealing can or the peripheral wall portion of the exterior can.

After the side wall portion 22 of the sealing can has been covered with the cylindrical resin film 30 before the heat treatment as illustrated in FIG. 7, the resin film 30 is subjected to the heat treatment, and as a result, the resin film 30 is integrated with the outer peripheral surface of the side wall portion 22 of the sealing can as illustrated in FIG. 8. This process corresponds to the step of integrating the resin film 30 with the side wall portion 22 of the sealing can while covering the open end portion 23 of the side wall portion 22 of the sealing can with the resin film 30 by contracting the resin film 30 under the heat treatment. The heat treatment temperature of the resin film 30 is not limited to a specific treatment, but if the heat treatment temperature is higher than the temperature of the glass transition point of the resin film 30, heat contraction of the resin film 30 is promoted, and the resin film 30 is more suitably integrated with the side wall portion 22 of the sealing can. A period of the heat treatment may be appropriately adjusted in accordance with progress of heat contraction of the resin film 30.

In this manner, a part of the resin film 30 constitutes the film peripheral wall portion 31 conforming to the outer peripheral surface of the side wall portion 22 of the sealing can, and another part of the resin film 30 constitutes the film bottom portion 32 located on the open end portion 23 of the side wall portion 22 of the sealing can. That is, with the heat treatment on the resin film 30 as described above, the film peripheral wall portion 31 covering the base end portion 22a, the shoulder portion 22c, and the diameter expansion portion 22b of the side wall portion 22 of the sealing can are formed. In addition, with the heat treatment on the resin film 30 as described above, the film bottom portion 32 is formed to extend inward in the film peripheral wall portion 31 from one end portion of the film peripheral wall portion 31 in the axial direction. That is, the portion of the resin film 30 projecting from the open end portion 23 of the side wall portion 22 of the sealing can is deformed inward in the side wall portion 22 relative to the open end portion 23 so that the film bottom portion 32 (whose projection length is indicated by M in FIG. 8) in which the resin film 30 projects inward in the side wall portion 22 from the open end portion 23 is thereby formed. This film bottom portion 32 covers the open end portion 23 of the side wall portion 22 of the sealing can.

To further ensure electrical insulation between the open end portion 23 of the side wall portion 22 of the sealing can and the bottom portion of the exterior can by the resin film 30, the projection length M of the film bottom portion 32 is preferably 0.1 mm or more, and more preferably 0.3 mm or more. On the other hand, to reduce a redundant volume of the film bottom portion 32 disposed in the battery, the projection length M is preferably 1.5 mm or less, more preferably 1 mm or less, and especially preferably 0.7 mm or less.

The portion projecting inward from the side wall portion 22 of the film bottom portion 32 may have a structure that is bent toward the flat portion of the sealing can.

Steps of manufacturing a coin-type battery using the sealing can (the negative electrode can) in which the resin film 30 is integrated will be described. Note that, as the exterior can (the positive electrode can), a general exterior can that includes a circular bottom portion and a cylindrical peripheral wall portion that is formed continuously from the bottom portion on an outer circumference and extends in the axial direction, and has an opening on an opposite side to the bottom portion may be used.

First, the plurality of plate-like positive electrodes 41 each of which is covered by the separator 44 and the plurality of plate-like negative electrodes 46 are stacked in the height direction to form a substantially columnar electrode body 40 illustrated in FIG. 1. The electrode body 40 is manufactured by a similar method to a known method, and therefore, description of a detailed manufacturing method will be omitted.

The electrode body 40 is disposed in the exterior can (hereinafter referred to as the positive electrode can 10) together with an insulation sheet 49, for example, and the positive electrode current collector 43 is either welded to, or electrically brought into contact with, the inner surface of the positive electrode can 10. Next, a non-aqueous electrolyte is injected into a sealing can (hereinafter referred to as a negative electrode can 20) in which the resin film 30 is attached onto the outer peripheral surface of the side wall portion 22 as described above, and the positive electrode can 10 housing the electrode body 40 is disposed to cover an opening of the negative electrode can 20. In this state, the peripheral wall portion 12 of the positive electrode can 10 is pushed radially inward against the side wall portion 22 of the negative electrode can 20 and caulked thereto.

At this time, the peripheral wall portion 12 of the positive electrode can 10 and the side wall portion 22 of the negative electrode can 20 are fitted together by displacing the peripheral wall portion 12 of the positive electrode can 10 with respect to the side wall portion 22 of the negative electrode can 20 in the radial direction in a state in which the resin film 30 is arranged between the negative electrode can 20 and the positive electrode can 10 such that the film peripheral wall portion 31 is sandwiched between the side wall portion 22 of the negative electrode can 20 and the peripheral wall portion 12 of the positive electrode can 10 and the film bottom portion 32 is sandwiched between the open end portion 23 in the side wall portion 22 of the negative electrode can 20 and the bottom portion 11 of the positive electrode can 10.

In the foregoing manner, the coin-type battery 1 having the configuration described above is obtained. To further enhance sealing properties of the battery, the sealant 50 is preferably provided not only between the resin film 30 and the side wall portion 22 of the negative electrode can 20 but also between the resin film 30 and the peripheral wall portion 12 and the bottom portion 11 of the of the positive electrode can 10, before assembly of the battery. The sealant 50 may be previously applied to at least one of the inner peripheral surface or the outer peripheral surface of the resin film 30 or may be previously applied to at least a portion of the side wall portion 22 of the negative electrode can 20 and the peripheral wall portion 12 and the bottom portion 11 of the positive electrode can 10.

As described above, the coin-type battery 1 that is formed through the above described steps is preferably designed such that the external diameter d1 of the peripheral wall portion 12 of the positive electrode can 10 and the external diameter d3 of the flat portion 21 of the negative electrode can 20 satisfy 0.87 ≤ d3/d1 ≤ 0.935. Also, the coin-type battery 1 is preferably designed such that, in a state where the positive electrode can 10 is caulked to the negative electrode can 20 with the resin film 30 sandwiched therebetween, the inner diameter d2 of the open end portion 13 in the peripheral wall portion 12 of the positive electrode can 10 and the external diameter d4 of the open end portion 23 in the side wall portion 22 of the negative electrode can 20 satisfy 0.94 ≤ d2/d4 ≤ 1.02.

Thus, the housing space S in the coin-type battery 1 can be made large, as compared to a known structure, and the capacity of the coin-type battery 1 can be increased. That is, a space inside of the negative electrode can 20 can be made large relative to external dimensions of the battery by causing a relation between the external diameter d3 of the flat portion 21 of the negative electrode can 20 and the external diameter d1 of the bottom portion 11 of the positive electrode can 10 to satisfy 0.87 ≤ d3/d1 ≤ 0.935.

Also, the sealing properties can be increased in a battery structure in which the ratio of the internal space of the negative electrode can 20 to the actual volume of the battery is made large by causing the relation between the external diameter d4 of the open end portion 23 in the side wall portion 22 of the negative electrode can 20 and the inner diameter d2 of the open end portion 13 in the peripheral wall portion 12 of the positive electrode can 10 to be 0.94 ≤ d2/d4 ≤ 1.02. Therefore, a compact sealing structure can be realized, and accordingly, the battery capacity can be increased without enlarging the coin-type battery 1.

Note that, in the coin-type battery 1, an amount by which the peripheral wall portion 12 of the positive electrode can 10 is displaced due to being caulked is relatively small, and therefore, the shape of the negative electrode can 20 is kept such that an original shape of the sealing can is maintained. Therefore, the external diameter d5 of the side wall portion 22 in the open end portion 23 in the original sealing can and the external diameter d4 of the side wall portion 22 in the open end portion 23 in the negative electrode can 20 of the coin-type battery 1 which has been assembled are substantially the same. Also, in order to cause a ratio (d3/d4) between the external diameters d3 and d4 of the flat portion 21 of the negative electrode can to be in a range of 0.85 or more and 0.98 or less, a ratio between the external diameter of the flat portion 21 in the original sealing can and d5 may be set to be substantially in a range of 0.85 or more and 0.98 or less.

### [Working Examples]

Next, a manufacturing method of the coin-type battery 1 according to the present invention will be more specifically described using working examples and comparative examples below.

### [First Working Example]

### <Formation of Positive Electrode>

Using LiCoO₂ as a positive electrode active material, carbon black as a conduction assisting agent, and PVDF as a binder, a positive electrode is formed in a manner described below.

First, 93 parts by mass of LiCoO₂ and 3 parts by mass of carbon black are mixed and a mixture obtained thereby and a binder solution in which 4 parts by mass of PVDF has been dissolved in NMP (N-methyl-2-pyrrolidone) in advance are mixed, thereby preparing a positive electrode mixture paste. The obtained positive electrode mixture paste is applied to both surfaces of a positive electrode current collector made of an aluminum foil having a thickness of 15 µm by an applicator. Note that the positive electrode mixture paste is applied onto the positive electrode current collector such that a coated portion and an uncoated portion are alternately arranged and also that a portion a front surface of which is a coated portion has a back surface that is also a coated portion. Subsequently, the applied positive electrode mixture paste is dried to form a positive electrode active material layer, roll press is performed thereon, and thereafter, the positive electrode current collector is cut into pieces each having a predetermined size, thereby obtaining strip positive sheets. Note that the positive electrode sheets are formed such that a portion of each of the positive electrode sheets on which the positive electrode active material layer is formed has an entire thickness of 140 µm.

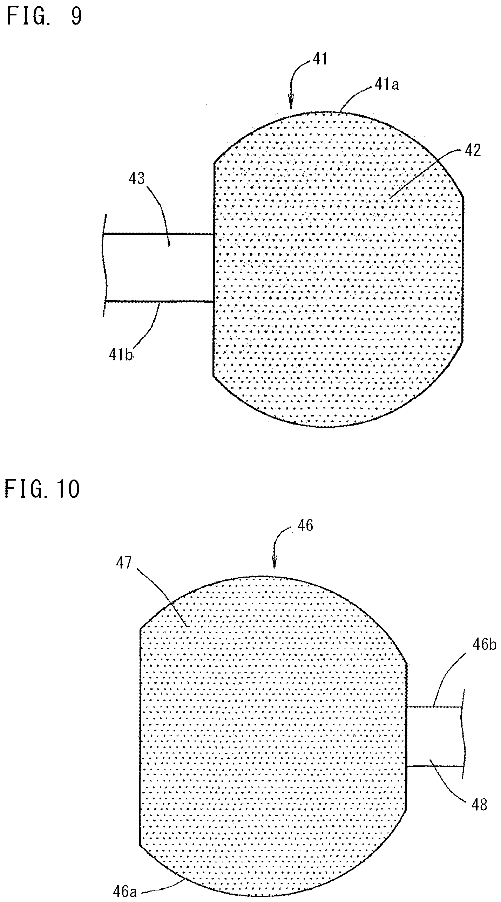

The strip positive electrode sheet is punched such that the portion on which the positive electrode active material layer is formed serves as a body portion (a diameter of an arc portion: 5.9 mm) and a portion on which the positive electrode active material layer is not formed serves as a positive electrode tab portion (a width: 2.0 mm), thereby obtaining a positive electrode. In FIG. 9, a plan view schematically illustrating a positive electrode after being punched is illustrated. The positive electrode 41 includes a body portion 41a in which the positive electrode active material layer 42 is formed on each of both surfaces of the positive electrode current collector 43 and a positive electrode tab portion 41b that protrudes from the body portion 41a and has a narrower width than that of the body portion 41a.

### <Formation of Negative Electrode>

Using graphite as a negative electrode active material and PVDF as a binder, a negative electrode is formed in a manner described below.

First, 94 parts by mass of graphite and a binder solution in which 6 parts by mass of PVDF has been dissolved in NMP in advance are mixed to prepare a negative electrode mixture paste. The obtained negative electrode mixture paste is applied to one surface or both surfaces of a negative electrode current collector made of a copper foil having a thickness of 10 µm by an applicator. Note that the negative electrode mixture paste is applied onto the negative electrode current collector such that a coated portion and an uncoated portion are alternatively arranged and that, if the negative electrode mixture paste is applied to both surfaces of the current collector, a portion a front surface of which is a coated portion has a back surface that is also a coated portion. Subsequently, the applied negative electrode mixture paste is dried to form a negative electrode active material layer, roll press is performed thereon, and thereafter, the negative electrode current collector is cut into pieces each having a predetermined size, thereby obtaining strip negative sheets. Note that the negative sheets are formed such that a portion of the negative electrode sheet on which the negative electrode active material layer is formed has an entire thickness of 190 µm if the negative electrode active material layer is formed on both surfaces of the current collector and 100 µm if the negative electrode active material layer is formed on one surface of the current collector.

The strip negative electrode sheet is punched such that the portion on which the negative electrode active material layer is formed serves as a body portion (a diameter of an arc portion: 6.5 mm) and a portion on which the negative electrode active material layer is not formed serves as a negative electrode tab portion, thereby obtaining each of a negative electrode that includes a negative electrode active material layer on one surface of a current collector and a negative electrode that includes a negative electrode active material layer on both surfaces of the current collector. Note that a negative electrode of negative electrodes that have a negative electrode active material layer on one surface of a current collector, which is arranged on a side closer to an external can, is punched after a PET film (an insulation sheet) which has a thickness of 100 µm is bonded to an exposed surface of the strip negative electrode sheet in which the current collector is exposed. In FIG. 10, a plan view schematically illustrating the negative electrode after being punched is illustrated. The negative electrode 46 includes a body portion 46a in which the negative electrode active material layer 47 is formed on both surfaces or one surface of the negative electrode current collector 48 and a negative electrode tab portion 46b that protrudes from the body portion 46a and has a narrower width than that of the body portion 46a.

### <Preparation of Non-aqueous Electrolyte>

A non-aqueous electrolyte was prepared by dissolving LiPF₆ into a mixed solvent in which a volume ratio between ethylene carbonate and methylethyl carbonate is 1:2 in a concentration of 1.2 mol/l.

### <Integration of Positive Electrode and Separator>

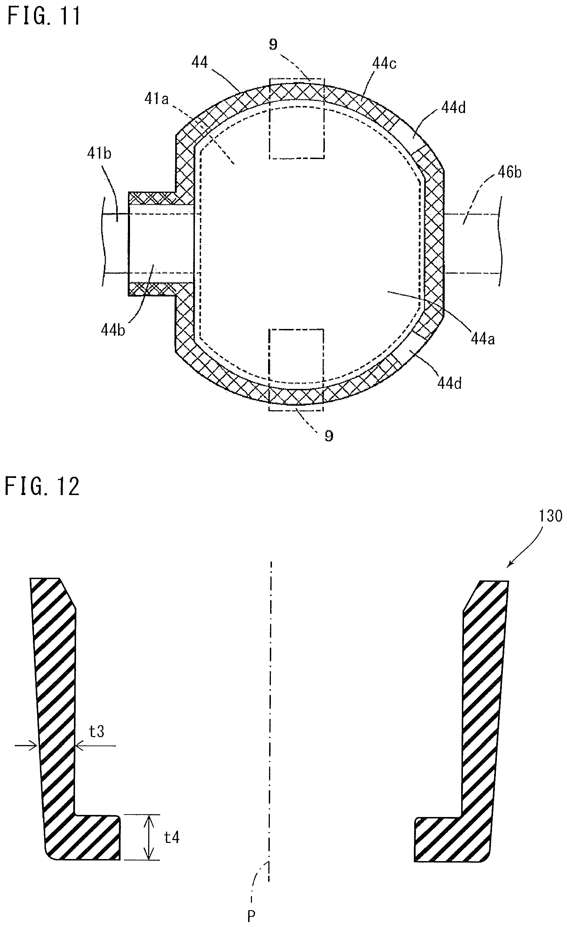

In FIG. 11, a separator that was used in this working example is schematically illustrated. A microporous film (a thickness of 16 µm) made of polyethylene having the shape illustrated in FIG. 11 is arranged on each of both surfaces of the positive electrode 41 formed in the above described manner and a portion of a peripheral portion of a main body portion 44a of each of both of the separators 44 and a portion of an extending portion 44b are welded by hot pressing (a temperature of 170 °C, a press time of 2 seconds) to form a joint portion in the portion of the peripheral portion of the main body portion 44a in each of the two separators 44 and the portion of the peripheral portion of the extending portion 44b, and thereby, the positive electrode 41 and the separator 44 are integrated.

FIG. 11 illustrates an electrode body in which the positive electrode 41, the negative electrode 46, and the separator 44 are stacked. In FIG. 11, the positive electrode 41 that is arranged under the separator 44 is indicted by a dotted line, the negative electrode tab portion 46b of the negative electrode 46, which is arranged further under them, is indicated by a long dashed short dashed line, and a binding tape 9 that restrains displacement of each component element of the electrode body is indicated by a long dashed double-short dashed line. The positive electrode 41 illustrated in FIG. 11 is stacked on the negative electrode 46 via one of a pair of separators 44 integrated with the positive electrode 41 sandwiched therebetween in the thickness direction in the electrode body. Note that, although not particularly illustrated in FIG. 11, the negative electrode is arranged under the separator 44 (a back side of a plane of FIG. 11).

The separator 44 illustrated in FIG. 11 includes a joint portion 44c (indicated by a lattice pattern in FIG. 10) welded to another separator 44 arranged thereunder (the back side of the plane of FIG. 10) with the positive electrode 41 (indicated by the dotted line in FIG. 10) sandwiched therebetween in the thickness direction thereof in the peripheral portion. That is, the pair of separators 44 arranged with the positive electrode 41 sandwiched therebetween in the thickness direction is welded with one another in the peripheral portion to have a bag shape, the positive electrode 41 is housed inside thereof, and thereby, the positive electrode 41 and the separators 44 are integrated.

Note that the separator 44 illustrated in FIG. 11 includes the main body portion 44a (that is, the main body portion 44a that has a larger area in a plan view than that of the body portion 41a of the positive electrode 41) which covers an entire surface of the body portion 41a of the positive electrode 41 and the extending portion 44b that protrudes from the main body portion 44a and covers a boundary portion between the body portion 41a and the positive electrode tab portion 41b of the positive electrode 41. Then, the joint portion 44c in which the pair of separators 44 arranged on the both surfaces of the positive electrode 41 is welded with one another is provided in at least portions of peripheral portions of the main body portion 44a and the extending portion 44b of the separators 44. A non-welding portion 44d in which the separators 44 are not welded with one another is provided in a portion of the peripheral portion of the main body portion 44a.

Note that, in this working example, the width of the joint portion 44c that is provided in each of the main body portion 44a and the extending portion 44b of the separator 44 is 0.3 mm and the length of the extending portion 44b from the main body portion 44a in the peripheral portion in a protruding direction is 0.5 mm. A portion of an outer edge of the main body portion 44a of the separator 44 that has a length of 90% of the entire length of the outer edge is the joint portion.

### <Assembly of Battery>

Using eleven positive electrodes integrated with the above described separators, ten negative electrodes each in which a negative electrode active material layer was formed on each of both surfaces of a negative electrode current collector, and two negative electrodes (one of which was a negative electrode in which a PET film was bonded to an exposed surface in which a current collector was exposed) each in which a negative electrode active material layer was formed on one surface of a negative electrode current collector, the positive electrodes and the negative electrodes were alternately stacked such that the negative electrodes each in which the negative electrode active material layer was formed on one surface of a negative electrode current collector were located in most outer portions, and the entire electrodes were fastened by a binding tape, thereby an electrode body was obtained.

Next, a positive electrode tab portion of each of the positive electrodes, which protruded toward one side of the electrode body, and a negative electrode tab portion of each of the negative electrodes, which protruded in an opposite direction to a direction of protrusion of the positive electrode tab portion, were integrated by welding the tab portions in a state in which the positive electrode tab portions and the negative electrode tab portions were separately put together.

As an exterior can, a metal can including a circular bottom portion and a cylindrical peripheral wall portion formed to extend from an outer peripheral end of the bottom portion in a direction (the height direction) orthogonal to the bottom portion and having an opening on an opposite side to the bottom portion was formed by press-forming a plate formed of SUS316 and having a thickness of 0.1 mm. Note that Ni plating was performed on an outer surface of the exterior can. An external diameter of the bottom portion of the exterior can was 7.85 mm.

As a sealing can, the metal can illustrated in FIG. 3 including a circular flat portion and a side wall portion formed to extend from an outer peripheral end of the flat portion in a direction (the height direction) orthogonal to the flat portion and having an opening on an opposite side to the flat portion was formed by press-forming a plate formed of NAS64 and having a thickness of 0.1 mm. Note that Ni plating was performed on an outer surface of the sealing can. The height h1 of the sealing can was 3.55 mm and the external diameter of the flat portion thereof was 7.14 mm. A shoulder portion was formed in a position located at 2.9 mm (82/100 of h1) from an edge of an open end portion toward the flat portion. The external diameter d5 of the side wall portion in the open end portion was 7.44 mm, the external diameter d6 and the can thickness t1 of the side wall portion in a position located at 7/10 of h1 from the edge of the open end portion toward the flat portion were 7.44 mm and 0.10 mm, respectively, and the can thickness t2 of the side wall portion in a position at 1/2 of t1 from the edge of the open end portion toward the flat portion was 0.10 mm. That is, a diameter expansion portion 22b of the side wall portion was formed such that d5 - d6 = 0 and t2/t1 =1 were satisfied.

Note that the edge of the open end portion was located in a position closer to an inner circumferential side in the radial direction than a central line of a thickness of the diameter expansion portion in the radial direction.

As a sealing member between the exterior can and the sealing can, a resin film (heat-shrinkable film) having a cylindrical shape illustrated in FIG. 6 and made of polyphenylene sulfide whose glass transition point is about 90°C was used.

The cylindrical resin film was placed onto the sealing can such that the side wall portion of the sealing can was covered with the resin film and one end portion of the resin film in the cylinder axis direction was located at the same position as the flat portion of the sealing can, and then, the other end portion of the resin film in the cylinder axis direction was cut such that the projection length L from the sealing can was 0.7 mm. Thereafter, the sealing can be covered with the resin film was subjected to a heat treatment while being held in an electric heating furnace at 110°C for 10 minutes so that the resin film was thereby integrated with the outer peripheral surface of the side wall portion of the sealing can. At this time, the projection length M of the resin film projecting inward from the open end portion of the sealing can was 0.5 mm.

Next, in the external can, the PET film of the negative electrode of the electrode body was arranged so as to face an inner surface of the exterior can, and the positive electrode tabs of the positive electrodes which were integrated were welded to the inner surface of the exterior can.

Furthermore, after the non-aqueous electrolyte was injected into the sealing can integrated with the resin film, sealing was performed by putting the exterior can in which the electrode body was housed over the sealing can and caulking the peripheral wall portion of the exterior can to the side wall portion of the sealing can. Thus, a coin-type non-aqueous secondary battery having a similar structure to that of the battery illustrated in FIG. 1 and having an external diameter of 7.85 mm and a height of 4 mm was obtained.

An "ELEP COAT (registered trademark) LSS-520MH (product name)" produced by Nitto Shinko Corporation was previously applied to a width of 3.5 mm over the inner peripheral surface of the resin film and the inner surface of the peripheral wall portion of the exterior can, and sealing was performed such that the sealant was interposed between the entire opposed surfaces of the resin film and the sealing can and the entire opposed surfaces of the resin film and the exterior can after assembly of a battery.

The external diameter d1 of the bottom portion of the exterior can in the battery thus obtained was 7.85 (mm). The inner diameter d2 of the open end portion in the peripheral wall portion of the exterior can was 7.26 (mm). The external diameter d3 of the flat portion of the sealing can was 7.14 (mm). The external diameter d4 of the open end portion in the side wall portion of the sealing can was 7.44 (mm). Therefore, in the battery, d3/d1 = 0.910, d2/d4 = 0.976, and d3/d4 = 0.960 were satisfied.

### [First Comparative Example]

A coin-type non-aqueous secondary battery was fabricated by using, as a sealing member, a ring-shaped polyphenylene sulfide gasket 130 having the cross-sectional shape illustrated in FIG. 12, instead of the resin film. FIG. 12 is an end view in a case where the ring-shaped gasket 130 is cut in a plane including an axis P.

In the gasket 130, a thickness t3 in the radial direction of a portion located between the peripheral wall portion of the exterior can and the side wall portion of the sealing can and a thickness t4 in the axial direction of a portion located between the side wall portion of the sealing can and the bottom portion of the exterior can were 0.25 mm and about 0.5 mm, respectively, before assembly of the battery.

In the battery of the first comparative example, since the gasket 130 was used as a sealing member instead of the resin film, the diameters of the sealing can and the electrode body, for example, were changed in accordance with an increase in the thickness of the sealing member.

Specifically, a positive electrode in which a curved portion of a body portion including the positive electrode active material layer has a diameter of 5.6 mm was formed from a strip positive electrode sheet, and a negative electrode in which a curved portion of a body portion including a negative electrode active material layer has a diameter of 6.2 mm was formed from a strip negative electrode sheet. The positive electrode and the negative electrode were used to form an electrode body to thereby fabricate a battery.

The external diameter d1 of the bottom portion of the exterior can in the battery was 7.85 (mm). The inner diameter d2 of the open end portion in the peripheral wall portion of the exterior can was 7.2 (mm). The external diameter d3 of the flat portion of the sealing can was 6.8 (mm). The external diameter d4 of the open end portion in the side wall portion of the sealing can was 7.1 (mm).

Therefore, in the battery of the first comparative example, d3/d1 = 0.866, d2/d4 = 1.014, and d3/d4 = 0.958 were satisfied.

### [Second Comparative Example]

Using a sealing can having a known structure in which a side wall portion was folded back in an open end portion, an annular gasket having a U-shaped longitudinal section corresponding to the side wall portion of the sealing can, and the same exterior can as that of the first working example, a coin-type battery was formed.

Note that, in the batteries of the second comparative example, a housing space in which an electrode body was housed was reduced as compared to the batteries of the first comparative example, and therefore, the external diameter of the electrode body was reduced accordingly.

### <Measurement of Battery Capacity>

For each of the batteries of the first working embodiment, the first comparative example and the second comparative example, when a theoretical capacity of a positive electrode was 1 C (mAh), charging at a constant voltage of 4.2 V was conducted after charging at a constant current of 0.5 C (mA) was conducted up to 4.2 V, and the charging was terminated at a time when a current value reduced to reach 0.05 C. Each of the charged batteries was discharged with a constant current of 0.2 C (mA) and a discharge capacity until the voltage of the battery reached 3 V was measured. Measurement results are illustrated in Table 1.

**[Table 1]**

| | Discharge Capacity (mAh) |
|---|---|
| First Working Example | 19.8 |
| First Comparative Example | 18.0 |
| Second Comparative Example | 15.7 |

As shown in Table 1, the coin-type battery of the first working example has an increased discharge capacity larger by 26% than that of the battery of the second comparative example having the conventional structure. As compared to the battery of the first comparative example whose internal volume was increased by reducing the thickness of the gasket, the coin-type battery of the first working example increased the discharge capacity by 10%.

The capacity difference described above becomes conspicuous as the external diameter of the battery decreases. Thus, for batteries whose external diameters are 10 mm or less, advantages of the present invention are more remarkable.

### <Evaluation of Moisture Permeability in High-temperature Storage>

To measure a content of moisture entering from a sealed portion into the battery in high-temperature storage in the batteries of the first working example and the first comparative example, an evaluation battery was fabricated in the following manner.

First, 0.4 g of electrolytic manganese dioxide powder was compressed under a pressing pressure of 130 kg to thereby form a disk-shaped formed body having a diameter of 6.34 mm and a height of 3.65 mm was produced, and then, the formed body was held in a dry air atmosphere at 270°C for 18 hours or more and dried.

Next, in the same manner as that of the first working example except that the dried formed body was used instead of the electrode body of the battery of the first working example and a non-aqueous electrolyte was not injected, an evaluation battery A (having the same sealing structure as that of the first working example) enclosing the formed body was produced.

For the battery of the first comparative example, an evaluation battery B (having the same sealing structure as that of the first comparative example) was produced in a manner similar to the evaluation battery A.

Each evaluation battery fabricated as described above was held in an atmosphere at 85°C at a relative humidity of 90% for 20 days, and then, a formed body was taken from the evaluation battery so that a moisture content of the formed body was measured with a Karl-Fisher moisture meter (produced by Kyoto Electronics Manufacturing Co., Ltd., "MKC-510N" (device name)).

In addition, the moisture content of the formed body in each evaluation battery before high-temperature storage as described above was previously measured, and a difference between a measurement result of the moisture content before the high-temperature storage and a measurement result of a moisture content after the high-temperature storage (i.e., the degree of increase of moisture content) was obtained. In this manner, sealing performances (moisture permeabilities in high-temperature storage) of the batteries of the first working example and the first comparative example were evaluated.

Table 2 shows the moisture content difference.

**[Table 2]**

| | Increased Moisture Content (µg) |
|---|---|
| First Working Example | 11 |
| First Comparative Example | 52 |

As shown in Table 2, since the battery of the first working example used the polyphenylene sulfide resin film as a sealing member, entering of moisture into the battery in high-temperature storage was significantly reduced, as compared to the battery of the first comparative example using the gasket of the same material as a sealing member. Thus, the battery showing good sealing properties was obtained.

Next, in order to check electrical insulation properties and sealing properties of batteries using the "hook-shaped gasket", the third to sixth comparative examples were formed in a manner described below.

### [Third Comparative Example]

Similar to the first working example, a coin-type non-aqueous secondary battery was formed, except that the external diameter d3 of a flat portion of a sealing can was 6.25 mm (d3/d1 = 0.796).

### [Fourth Comparative Example]

Similar to the first working example, a coin-type non-aqueous secondary battery was formed, except that the external diameter d3 of the flat portion of the sealing can was 7.4 mm (d3/d1 = 0.943) and the inner diameter d2 of the open end portion in the peripheral wall portion of the exterior can was 7.5 mm (d2/d4 = 1.008) in accordance with an increase in the external diameter d3.

### [Fifth Comparative Example]

Similar to the first working example, a coin-type non-aqueous secondary battery was formed, except that the external diameter d3 of the flat portion of the sealing can was 6.85 mm (d3/d1 = 0.873) and the inner diameter d2 of the open end portion in the peripheral wall portion of the exterior can was 6.95 mm (d2/d4 = 0.934).

### [Sixth Comparative Example]

Similar to the first working example, a coin-type non-aqueous secondary battery was formed, except that the inner diameter d2 of an open end portion in a peripheral wall portion of an exterior can was 7.65 mm (d2/d4 = 1.028).

### <Check of Presence or Absence of Electrical Insulation and Sealing Properties>

In each of the batteries of the first working example and the third to sixth comparative examples, charging and discharging were performed under the same conditions as those of the above described battery capacity measurement to measure an internal resistance of each of the batteries after being discharged, and thereby, presence or absence of a short circuit in each of the batteries was checked.

Also, charging was performed under the same conditions as those of the above described battery capacity measurement, the batteries after being charged were stored in an environment of 60 °C and a relative humidity of 90% for 50 days, and thereafter, presence or absence of a fluid leakage in the batteries was checked.

Results of the above described check are illustrated in Table 3. Note that, in Table 3, each of batteries in which a short circuit and a fluid leakage did not occur is indicated by a circle and each of batteries in which a short circuit and a fluid leakage occurred is indicated by ×.

**[Table 3]**

| | d3/d1 | d2/d4 | Short Circuit | Fluid Leakage |
|---|---|---|---|---|
| First Working Example | 0.910 | 0.976 | ○ | ○ |
| Third Comparative Example | 0.796 | 0.976 | × | ○ |
| Fourth Comparative Example | 0.943 | 1.008 | ○ | × |
| Fifth Comparative Example | 0.873 | 0.934 | × | × |
| Sixth Comparative Example | 0.910 | 1.028 | ○ | × |

As is understood from Table 3, in the battery of the first working example in which the values of d3/d1 and d2/d4 were in a range of 0.87 ≤ d3/d1 ≤ 0.935 and in a range of 0.94 ≤ d2/d4 ≤ 1.02, respectively, a short circuit and a fluid leakage did not occur.

On the other hand, in the battery of the third comparative example, as compared to the battery of the first working example, a ratio of a housing space of an electrode body was small, and therefore, a short circuit occurred.

Further, in the batteries of the fourth to sixth comparative examples, a fluid leakage occurred due to reduction in sealing properties. In particular, in the battery of the fifth comparative example in which the value of d2/d4 was small, the open end portion of the side wall portion of the sealing can presses the resin film in the axial direction with a large pressing force, and thus, a short circuit occurred because of contact between the open end portion of the side wall portion of the sealing can and the bottom portion of the exterior can.

As is clear from the foregoing, according to the constitution of the present invention, a capacity of a small coin-type battery can be increased while maintaining sealing properties.

In the above described embodiment, the electrode body 40 has a structure in which the plurality of positive electrodes 41 and the plurality of negative electrodes 46 are alternately stacked, but a structure of an electrode body may be a structure other than the above described structure.

In the above described embodiment, the positive electrode 41 includes a positive electrode active material layer containing a positive electrode active material, such as lithium cobalt oxide or the like, and the negative electrode 46 includes the negative electrode active material layer 47 containing a negative electrode active material, such as graphite or the like. However, a structure of a positive electrode and a negative electrode may be a structure other than the above described structure.

Although, in the above described embodiment, the positive electrode can 10 is an exterior can and the negative electrode can 20 is a sealing can, reversely, a positive electrode can may be a sealing can and a negative electrode can may be an exterior can.

### INDUSTRIAL APPLICABILITY

A coin-type battery according to the present invention is applicable to a structure in which a sealing member is sandwiched between a sealing can and an exterior can.

### REFERENCE SIGNS LIST

1 Coin-type battery
10 Positive electrode can (exterior can)
11 Bottom portion
12 Peripheral wall portion
13 Open end portion
20 Negative electrode can (sealing can)
21 Flat portion
22, 122 Side wall portion
22a Base end portion
22b, 122b Diameter expansion portion
22c Shoulder portion
23, 123 Open end portion
23a, 123a Tip (of open end portion)
23b Outer circumference side portion (of open end portion)
30 Resin film
30a Hole
31 Film peripheral wall portion
32 Film bottom portion
40 Electrode body (power generation element)
50 Sealant
P Axis
Q Central line
S Housing space

## Claims

1. A coin-type battery (1) comprising:
an exterior can (10) including a bottom portion (11) and a peripheral wall portion (12) and having an opening on an opposite side to the bottom portion (11) in a thickness direction;
a sealing can (20) which includes a flat portion (21) and a side wall portion (22) and has an opening on an opposite side to the flat portion (21) in the thickness direction and of which a stepped shoulder portion (22c) that is located between the flat portion (21) and the opening and expands in a radial direction is provided in the side wall portion (22);
a resin film (30) at least a portion of which is arranged between the peripheral wall portion (12) of the exterior can (10) and the side wall portion (21) of the sealing can (20); and
a power generation element (40) arranged in a housing space formed by the exterior can (10) and the sealing can (20),
wherein the resin film (30) includes
a film peripheral wall portion (31) formed to have a cylindrical shape and arranged between the peripheral wall portion (12) of the exterior can (10) and the side wall portion (21) of the sealing can (20), and
a film bottom portion (32) arranged between the bottom portion (11) of the exterior can (10) and an open end portion (23) of the side wall portion (22) of the sealing can (20), and
is an annular body, and
when it is assumed that an external diameter of the bottom portion (11) of the exterior can (10) is d1 (mm), an inner diameter of the open end portion (13) in the peripheral wall portion (12) of the exterior can (10) is d2 (mm), an external diameter of the flat portion (21) of the sealing can (20) is d3 (mm), and an external diameter of the open end portion (23) in the side wall portion (22) of the sealing can (20) is d4 (mm), 0.87 ≤ d3/d1 ≤ 0.935 and 0.94 ≤ d2/d4 ≤ 1.02 are satisfied, and
a sealant (50) is disposed at at least one of a position between the peripheral wall portion (12) of the exterior can (10) and the resin film (30) or a position between the side wall portion (22) of the sealing can (20) and the resin film (30).

2. The coin-type battery (1) according to claim 1,
wherein d3/d4 ≥ 0.85 is satisfied.

3. The coin-type battery (1) according to claim 1 or 2,
wherein the resin film (30) is formed of a heat-resistant resin with a melting point or a decomposition temperature of which is 200 °C or more.

4. The coin-type battery (1) according to claim 3,
wherein the heat-resistant resin is polyphenylene sulfide.

5. The coin-type battery (1) according to any one of claims 1 to 4,
wherein the resin film (30) has a thickness of 0.05 mm to 0.15 mm.

6. A method for manufacturing the coin-type battery (1) according to any one of claims 1 to 5, wherein
the resin film (30) is a heat-shrinkable cylindrical member, the method comprising the steps of:
applying the sealant (50) at least either between the peripheral wall portion (12) of the exterior can (10) and the resin film (30) or between the side wall portion (22) of the sealing can (20) and the resin film (30);
covering an outer peripheral surface of the side wall portion (22) of the sealing can (20) with the resin film (30) such that an end portion of the resin film (30) projects from the side wall portion (22) of the sealing can (20);
performing a heat treatment on the resin film (30) and shrinking the resin film (30) to thereby integrate the resin film (30) with the side wall portion (22) of the sealing can (20) while covering an open end portion (23) of the side wall portion (22) of the sealing can (20) with the resin film (30);
disposing the side wall portion (22) of the sealing can (20) integrated with the resin film (30) inside the peripheral wall portion (12) of the exterior can (10) to thereby locate the resin film (30) between the peripheral wall portion (12) of the exterior can (10) and the side wall portion (22) of the sealing can (20) and between the bottom portion (11) of the exterior can (10) and the open end portion (23) of the side wall portion (22) of the sealing can (20); and
displacing the peripheral wall portion (12) of the exterior can (10) in a radial direction relative to the side wall portion (22) of the sealing can (20) to thereby fit the peripheral wall portion (12) of the exterior can (10) and the side wall portion (22) of the sealing can (20) to each other, and
in a state before the peripheral wall portion (12) of the exterior can (10) and the side wall portion (22) of the sealing can (20) are fitted together,
when it is assumed that a height of the sealing can (20) is h1 (mm),
in the side wall portion (22) of the sealing can (20), an external diameter of the open end portion (23) is d5 (mm), an external diameter and a can thickness at a position of 7/10 of h1 from a tip of the open end portion (23) toward the flat portion (21) are d6 (mm) and t1 (mm), respectively, and a can thickness at a position of 1/2 of t1 from the tip of the open end portion (23) toward the flat portion (21) is t2 (mm), -0.1 ≤ d5-d6 ≤ 0.1 and t2/t1 ≥ 0.9 are satisfied.

7. The method for manufacturing a coin-type battery (1) according to claim 6,
wherein a temperature at which the heat treatment is performed on the resin film (30) is higher than a temperature of a glass transition point of the resin film (30).

8. The method for manufacturing a coin-type battery (1) according to claim 6 or 7,
wherein in the step of covering the outer peripheral surface of the side wall portion (22) of the sealing can (20) with the resin film (30), the resin film (30) covering the outer peripheral surface of the side wall portion (22) of the sealing can (20) is caused to project from the open end portion (23) of the side wall portion (22) of the sealing can (20) to a range of 0.3 mm to 2 mm.

9. The method for manufacturing a coin-type battery (1) according to any one of claims 6 to 8,
wherein in the step of integrating the resin film (30) with the side wall portion of the sealing can (20) by performing the heat treatment on the resin film (30) and shrinking the resin film (30), a portion of the resin film projecting from the open end portion (23) of the side wall portion (22) of the sealing can (20) is deformed inward in the side wall portion (22) relative to the open end portion (23) and, thereby, the resin film (30) projects inward in the side wall portion (22) from the open end portion (23) to a range of 0.1 mm to 1.5 mm.

## Patentansprüche

1. Eine Knopfzellen-artige Batterie (1), die folgende Merkmale aufweist:
eine äußere Dose (10), die einen Bodenabschnitt (11) und einen Umfangswandabschnitt (12) aufweist und eine Öffnung auf einer dem Bodenabschnitt (11) in einer Dickenrichtung gegenüberliegenden Seite aufweist;
eine Dichtungsdose (20), die einen flachen Abschnitt (21) und einen Seitenwandabschnitt (22) umfasst und eine Öffnung auf einer dem flachen Abschnitt (21) in der Dickenrichtung gegenüberliegenden Seite aufweist und von der ein gestufter Schulterabschnitt (22c), der zwischen dem flachen Abschnitt (21) und der Öffnung angeordnet ist und sich in einer radialen Richtung ausdehnt, in dem Seitenwandabschnitt (22) vorgesehen ist;
einen Harzfilm (30), von dem zumindest ein Abschnitt zwischen dem Umfangswandabschnitt (12) der äußeren Dose (10) und dem Seitenwandabschnitt (21) der Dichtungsdose (20) angeordnet ist; und
ein Leistungserzeugungselement (40), das in einem Gehäuseraum angeordnet ist, der durch die äußere Dose (10) und die Dichtungsdose (20) gebildet wird,
wobei der Harzfilm (30) Folgendes umfasst:
einen Filmumfangswandabschnitt (31), der dahingehend gebildet ist, eine zylindrische Form aufzuweisen, und der zwischen dem Umfangswandabschnitt (12) der äußeren Dose (10) und dem Seitenwandabschnitt (21) der Dichtungsdose (20) angeordnet ist, und
einen Filmbodenabschnitt (32), der zwischen dem Bodenabschnitt (11) der äußeren Dose (10) und einem Offenes-Ende-Abschnitt (23) des Seitenwandabschnitts (22) der Dichtungsdose (20) angeordnet ist, und
ein ringförmiger Körper ist, und
wenn angenommen wird, dass ein Außendurchmesser des Bodenabschnitts (11) der äußeren Dose (10) d1 (mm) beträgt, ein Innendurchmesser des Offenes-Ende-Abschnitts (13) in dem Umfangswandabschnitt (12) der äußeren Dose (10) d2 (mm) beträgt, ein Außendurchmesser des flachen Abschnitts (21) der Dichtungsdose (20) d3 (mm) beträgt und ein Außendurchmesser des Offenes-Ende-Abschnitts (23) in dem Seitenwandabschnitt (22) der Dichtungsdose (20) d4 (mm) beträgt, 0,87 ≤ d3/d1 ≤ 0,935 und 0,94 ≤ d2/d4 ≤ 1,02 erfüllt sind, und
ein Dichtungsmittel (50) an einer Position zwischen dem Umfangswandabschnitt (12) der äußeren Dose (10) und dem Harzfilm (30) und/oder einer Position zwischen dem Seitenwandabschnitt (22) der Dichtungsdose (20) und dem Harzfilm (30) angeordnet ist.

2. Die Knopfzellen-artige Batterie (1) gemäß Anspruch 1,
wobei d3/d4 ≥ 0,85 erfüllt ist.

3. Die Knopfzellen-artige Batterie (1) gemäß Anspruch 1 oder 2,
wobei der Harzfilm (30) aus einem hitzebeständigen Harz gebildet ist, dessen Schmelzpunkt oder Zersetzungstemperatur 200 °C oder mehr beträgt.

4. Die Knopfzellen-artige Batterie (1) gemäß Anspruch 3,
wobei das hitzebeständige Harz Polyphenylensulfid ist.

5. Die Knopfzellen-artige Batterie (1) gemäß einem der Ansprüche 1 bis 4,
wobei der Harzfilm (30) eine Dicke von 0,05 mm bis 0,15 mm aufweist.

6. Ein Verfahren zum Herstellen der Knopfzellen-artigen Batterie (1) gemäß einem der Ansprüche 1 bis 5, wobei
der Harzfilm (30) ein wärmeschrumpfbares zylindrisches Element ist, wobei das Verfahren die folgenden Schritte aufweist:
Aufbringen des Dichtungsmittels (50) zumindest entweder zwischen dem Umfangswandabschnitt (12) der äußeren Dose (10) und dem Harzfilm (30) oder zwischen dem Seitenwandabschnitt (22) der Dichtungsdose (20) und dem Harzfilm (30);
Bedecken einer Außenumfangsfläche des Seitenwandabschnitts (22) der Dichtungsdose (20) mit dem Harzfilm (30), so dass ein Endabschnitt des Harzfilms (30) von dem Seitenwandabschnitt (22) der Dichtungsdose (20) hervorsteht;
Durchführen einer Wärmebehandlung an dem Harzfilm (30) und Schrumpfen des Harzfilms (30), um dadurch den Harzfilm (30) mit dem Seitenwandabschnitt (22) der Dichtungsdose (20) zu integrieren, während ein Offenes-Ende-Abschnitt (23) des Seitenwandabschnitts (22) der Dichtungsdose (20) mit dem Harzfilm (30) bedeckt wird;
Anordnen des Seitenwandabschnitts (22) der Dichtungsdose (20), der mit dem Harzfilm (30) integriert ist, innerhalb des Umfangswandabschnitts (12) der äußeren Dose (10), um dadurch den Harzfilm (30) zwischen dem Umfangswandabschnitt (12) der äußeren Dose (10) und dem Seitenwandabschnitt (22) der Dichtungsdose (20) und zwischen dem Bodenabschnitt (11) der äußeren Dose (10) und dem Offenes-Ende-Abschnitt (23) des Seitenwandabschnitts (22) der Dichtungsdose (20) anzuordnen; und
Verschieben des Umfangswandabschnitts (12) der äußeren Dose (10) in einer radialen Richtung relativ zu dem Seitenwandabschnitt (22) der Dichtungsdose (20), um dadurch den Umfangswandabschnitt (12) der äußeren Dose (10) und den Seitenwandabschnitt (22) der Dichtungsdose (20) aneinander anzupassen, und
in einem Zustand, bevor der Umfangswandabschnitt (12) der äußeren Dose (10) und der Seitenwandabschnitt (22) der Dichtungsdose (20) aneinander angepasst sind,
wenn angenommen wird, dass eine Höhe der Dichtungsdose (20) h1 (mm) beträgt, in dem Seitenwandabschnitt (22) der Dichtungsdose (20) ein Außendurchmesser des Offenes-Ende-Abschnitts (23) d5 (mm) beträgt, ein Außendurchmesser und eine Dosendicke an einer Position von 7/10 von h1 von einer Spitze des Offenes-Ende-Abschnitts (23) zu dem flachen Abschnitt (21) jeweils d6 (mm) und t1 (mm) betragen und eine Dosendicke an einer Position von 1/2 von t1 von der Spitze des Offenes-Ende-Abschnitts (23) zu dem flachen Abschnitt (21) t2 (mm) beträgt, -0,1 ≤ d5-d6 ≤ 0,1 und t2/t1 ≥ 0,9 erfüllt sind.

7. Das Verfahren zum Herstellen einer Knopfzellen-artigen Batterie (1) gemäß Anspruch 6,
wobei eine Temperatur, bei der die Wärmebehandlung an dem Harzfilm (30) durchgeführt wird, höher als eine Temperatur eines Glasübergangspunkts des Harzfilms (30) ist.

8. Das Verfahren zum Herstellen einer Knopfzellen-artigen Batterie (1) gemäß Anspruch 6 oder 7,
wobei in dem Schritt des Bedeckens der Außenumfangsfläche des Seitenwandabschnitts (22) der Dichtungsdose (20) mit dem Harzfilm (30) bewirkt wird, dass der Harzfilm (30), der die Außenumfangsfläche des Seitenwandabschnitts (22) der Dichtungsdose (20) bedeckt, von dem Offenes-Ende-Abschnitt (23) des Seitenwandabschnitts (22) der Dichtungsdose (20) in einem Bereich von 0,3 mm bis 2 mm hervorsteht.

9. Das Verfahren zum Herstellen einer Knopfzellen-artigen Batterie (1) gemäß einem der Ansprüche 6 bis 8,
wobei in dem Schritt des Integrierens des Harzfilms (30) mit dem Seitenwandabschnitt der Dichtungsdose (20) durch Durchführen der Wärmebehandlung an dem Harzfilm (30) und Schrumpfen des Harzfilms (30) ein Abschnitt des Harzfilms, der von dem Offenes-Ende-Abschnitt (23) des Seitenwandabschnitts (22) der Dichtungsdose (20) hervorsteht, in dem Seitenwandabschnitt (22) relativ zu dem Offenes-Ende-Abschnitt (23) nach innen verformt wird und dadurch der Harzfilm (30) in dem Seitenwandabschnitt (22) von dem Offenes-Ende-Abschnitt (23) in einem Bereich von 0,1 mm bis 1,5 mm nach innen hervorsteht.

## Revendications

1. Batterie (1) de type pièce de monnaie comprenant :
un boîtier extérieur (10) incluant une partie fond (11) et une partie paroi périphérique (12) et présentant une ouverture sur un côté opposé à la partie fond (11) dans une direction d'épaisseur ;
un boîtier d'étanchéité (20) qui inclut une partie plate (21) et une partie paroi latérale (22) et présente une ouverture sur un côté opposé à la partie plate (21) dans la direction d'épaisseur et dont une partie épaulement étagé (22c) qui est située entre la partie plate (21) et l'ouverture et s'étend dans une direction radiale est ménagée dans la partie paroi latérale (22) ;
un film de résine (30) dont au moins une partie est agencée entre la partie paroi périphérique (12) du boîtier extérieur (10) et la partie paroi latérale (21) du boîtier d'étanchéité (20) ; et
un élément de production d'énergie (40) agencé dans un espace de réception formé par le boîtier extérieur (10) et le boîtier d'étanchéité (20),
dans laquelle le film de résine (30) inclut
une partie paroi périphérique de film (31) formée pour présenter une forme cylindrique et agencée entre la partie paroi périphérique (12) du boîtier extérieur (10) et la partie paroi latérale (21) du boîtier d'étanchéité (20), et
une partie fond de film (32) agencée entre la partie fond (11) du boîtier extérieur (10) et une partie extrémité ouverte (23) de la partie paroi latérale (22) du boîtier d'étanchéité (20), et est un corps annulaire, et
lorsque l'on suppose qu'un diamètre externe de la partie fond (11) du boîtier extérieur (10) est d1 (mm), qu'un diamètre interne de la partie extrémité ouverte (13) dans la partie paroi périphérique (12) du boîtier extérieur (10) est d2 (mm), qu'un diamètre externe de la partie plate (21) du boîtier d'étanchéité (20) est d3 (mm) et qu'un diamètre externe de la partie extrémité ouverte (23) dans la partie paroi latérale (22) du boîtier d'étanchéité (20) est d4 (mm), 0,87 ≤ d3/d1 ≤ 0,935 et 0,94 ≤ d2/d4 ≤ 1,02 sont satisfaits, et
un agent d'étanchéité (50) est disposé à au moins une parmi une position entre la partie paroi périphérique (12) du boîtier extérieur (10) et le film de résine (30) ou une position entre la partie paroi latérale (22) du boîtier d'étanchéité (20) et le film de résine (30).

2. Batterie (1) de type pièce de monnaie selon la revendication 1,
dans laquelle d3/d4 ≥ 0,85 est satisfait.

3. Batterie (1) de type pièce de monnaie selon la revendication 1 ou 2,
dans laquelle le film de résine (30) est formé d'une résine résistant à la chaleur dont un point de fusion ou une température de décomposition est de 200 °C ou plus.

4. Batterie (1) de type pièce de monnaie selon la revendication 3,
dans laquelle la résine résistant à la chaleur est du sulfure de polyphénylène.

5. Batterie (1) de type pièce de monnaie selon l'une quelconque des revendications 1 à 4,
dans laquelle le film de résine (30) présente une épaisseur de 0,05 mm à 0,15 mm.

6. Procédé de fabrication de la batterie (1) de type pièce de monnaie selon l'une quelconque des revendications 1 à 5, dans lequel
le film de résine (30) est un élément cylindrique thermorétractable, le procédé comprenant les étapes consistant à :
appliquer l'agent d'étanchéité (50) au moins entre la partie paroi périphérique (12) du boîtier extérieur (10) et le film de résine (30) ou entre la partie paroi latérale (22) du boîtier d'étanchéité (20) et le film de résine (30) ;
recouvrir une surface périphérique externe de la partie paroi latérale (22) du boîtier d'étanchéité (20) avec le film de résine (30) de telle sorte qu'une partie extrémité du film de résine (30) se projette depuis la partie paroi latérale (22) du boîtier d'étanchéité (20) ;
réaliser un traitement thermique sur le film de résine (30) et faire rétrécir le film de résine (30) pour intégrer ainsi le film de résine (30) avec la partie paroi latérale (22) du boîtier d'étanchéité (20) tout en recouvrant une partie extrémité ouverte (23) de la partie paroi latérale (22) du boîtier d'étanchéité (20) avec le film de résine (30) ;
disposer la partie paroi latérale (22) du boîtier d'étanchéité (20) intégrée avec le film de résine (30) à l'intérieur de la partie paroi périphérique (12) du boîtier extérieur (10) pour positionner ainsi le film de résine (30) entre la partie paroi périphérique (12) du boîtier extérieur (10) et la partie paroi latérale (22) du boîtier d'étanchéité (20) et entre la partie fond (11) du boîtier extérieur (10) et la partie extrémité ouverte (23) de la partie paroi latérale (22) du boîtier d'étanchéité (20) ; et
déplacer la partie paroi périphérique (12) du boîtier extérieur (10) dans une direction radiale par rapport à la partie paroi latérale (22) du boîtier d'étanchéité (20) pour adapter ainsi la partie paroi périphérique (12) du boîtier extérieur (10) et la partie paroi latérale (22) du boîtier d'étanchéité (20) l'une à l'autre, et
dans un état avant que la partie paroi périphérique (12) du boîtier extérieur (10) et la partie paroi latérale (22) du boîtier d'étanchéité (20) ne soient adaptées l'une à l'autre,
lorsqu'on suppose qu'une hauteur du boîtier d'étanchéité (20) est h1 (mm), dans la partie paroi latérale (22) du boîtier d'étanchéité (20), qu'un diamètre externe de la partie extrémité ouverte (23) est d5 (mm), qu'un diamètre externe et une épaisseur de boîtier à une position de 7/10 de h1 à partir d'une pointe de la partie extrémité ouverte (23) vers la partie plate (21) sont respectivement d6 (mm) et t1 (mm), et qu'une épaisseur de boîtier à une position de 1/2 de t1 à partir de la pointe de la partie extrémité ouverte (23) vers la partie plate (21) est t2 (mm), -0,1 ≤ d5-d6 ≤ 0,1 et t2/t1 ≥ 0,9 sont satisfaits.

7. Procédé de fabrication d'une batterie (1) de type pièce de monnaie selon la revendication 6,
dans lequel une température à laquelle le traitement thermique est réalisé sur le film de résine (30) est supérieure à une température d'un point de transition vitreuse du film de résine (30).

8. Procédé de fabrication d'une batterie (1) de type pièce de monnaie selon la revendication 6 ou 7,
dans lequel à l'étape consistant à recouvrir la surface périphérique externe de la partie paroi latérale (22) du boîtier d'étanchéité (20) avec le film de résine (30), le film de résine (30) recouvrant la surface périphérique externe de la partie paroi latérale (22) du boîtier d'étanchéité (20) est amené à se projeter depuis la partie extrémité ouverte (23) de la partie paroi latérale (22) du boîtier d'étanchéité (20) sur une plage de 0,3 mm à 2 mm.

9. Procédé de fabrication d'une batterie (1) de type pièce de monnaie selon l'une quelconque des revendications 6 à 8,
dans lequel à l'étape consistant à intégrer le film de résine (30) avec la partie paroi latérale du boîtier d'étanchéité (20) en réalisant le traitement thermique sur le film de résine (30) et en faisant rétrécir le film de résine (30), une partie du film de résine se projetant depuis la partie extrémité ouverte (23) de la partie paroi latérale (22) du boîtier d'étanchéité (20) est déformée vers l'intérieur dans la partie paroi latérale (22) par rapport à la partie extrémité ouverte (23) et, ainsi, le film de résine (30) se projette vers l'intérieur dans la partie paroi latérale (22) depuis la partie extrémité ouverte (23) sur une plage de 0,1 mm à 1,5 mm.
